# EUROPÄISCHE PATENTSCHRIFT

(11) **EP 3 407 997 B1**
(45) Veröffentlichungstag und Bekanntmachung des Hinweises auf die Patenterteilung: **22.12.2021**
(21) Anmeldenummer: 17703648.0
(22) Anmeldetag: 17.01.2017
(51) Int. Cl.: A63H 33/00, A63H 3/28, A63H 5/00

(54) **SPIELZEUG**
TOY
JOUET

(30) Priorität: 25.01.2016 DE 102016000630
(43) Veröffentlichungstag der Anmeldung: 05.12.2018
(73) Patentinhaber: Boxine GmbH, 40237 Düsseldorf (DE)
(72) Erfinder: FAßBENDER, Patric, 40476 Düsseldorf (DE); STAHL, Marcus, 40468 Düsseldorf (DE); WILMANNS, Christian, 41564 Kaarst (DE)
(74) Vertreter: Tilmann, Max Wilhelm
(86) Internationale Anmeldenummer: PCT/EP2017/000046
(87) Internationale Veröffentlichungsnummer: WO 2017/129349

(56) Entgegenhaltungen:
- WO-A1-2006/048668
- WO-A1-2015/104222
- WO-A2-2006/058204
- DE-A1-102007 045 129
- DE-A1-102011 056 420
- US-A1- 2008 153 594
- US-A1- 2014 033 583
- US-A1- 2014 162 785
- US-B1- 8 287 327

## Beschreibung

Die Erfindung betrifft ein Spielzeug zur Wiedergabe von Musik oder einer gesprochenen Geschichte und ein System mit einem Spielzeug und einem Kennungsträger sowie ein Verfahren zur Wiedergabe einer Audioinformation.

Aus WO 2015/104222 A1 ist ein Spielzeug zur Wiedergabe von Musik oder einer gesprochenen Geschichte mit einem Lautsprecher oder einem Lautsprecheranschluss, einem Sensor, der innerhalb eines Bereichs seiner Umgebung eine Eigenschaft oder eine Änderung einer Eigenschaft dieser Umgebung feststellen kann, sowie einer Kontrolleinheit, die den Lautsprecher oder den Lautsprecheranschluss zur Wiedergabe von Musik oder einer gesprochenen Geschichte ansteuern kann, wenn der Sensor innerhalb des Bereichs einer Umgebung eine bestimmte Eigenschaft oder eine bestimmte Änderung einer Eigenschaft dieser Umgebung feststellt oder wenn die Kontrolleinheit eine bestimmte Änderung der von dem Sensor festgestellten Eigenschaft feststellt, bekannt. Aus WO 2015/104222 A1 ist es ferner bekannt, ein solches Spielzeug mit einem Kennungsträger zu einem System zusammenzufügen, bei dem der Kennungsträger eine Eigenschaft hat, die der Sensor feststellen kann, wenn sich der Kennungsträger innerhalb des Bereichs der Umgebung des Sensors befindet, oder der Kennungsträger eine Eigenschaft der Umgebung des Sensors ändert, die der Sensor im Bereich seiner Umgebung feststellen kann. Als bevorzugtes Ausführungsbeispiel ist es aus WO 2015/104222 A1 bekannt, dass der Kennungsträger einen RFID-Transponder aufweist oder eine Antenne aufweist und eine modulierte Welle abstrahlen und/oder empfangen kann. Ferner ist es aus dieser Schrift bekannt, dass der Sensor ein Lesegerät zum Kommunizieren mit einem passiven RFID-Transponder und/oder zum Kommunizieren mit einem aktiven RFID-Transponder ist.

In einer bevorzugten Ausführungsform weist die Vorrichtung gemäß WO 2015/104222 A1 eine Einheit zum Empfangen von Daten aus dem Internet und/oder zum Senden von Daten ins Internet auf, insbesondere bevorzugt eine Antenne für ein Wireless Local Area Network (WLAN), eine mobile Datenfunktechnologie wie beispielsweise LTE, UMTS oder deren Vorgänger oder Nachfolger oder eine Anschlussbuchse für den Anschluss eines Kabels eines lokalen Netzwerks, das auch einen Internetzugang aufweist, beispielsweise eine Anschlussbuchse für ein Ethernet-Kabel. Durch das Vorhandensein einer Einheit zum Empfangen von Daten aus dem Internet besteht die Möglichkeit, dass die Kontrolleinheit die Daten, die die wiederzugebende Audioinformation in einem bestimmten Datenformat enthalten, aus dem Internet herunterlädt. Auf diese Weise kann die Vorrichtung eine Audioinformation abspielen, die nicht in der Vorrichtung gespeichert war, bevor der Sensor innerhalb des Bereichs seiner Umgebung eine bestimmte Eigenschaft oder eine bestimmte Änderung einer Eigenschaft dieser Umgebung feststellt oder die Kontrolleinheit eine bestimmte Änderung der von dem Sensor festgestellten Eigenschaft feststellt. Dabei kann die Kontrolleinheit derart ausgebildet sein, dass sie die Daten aus dem Internet empfängt und in einem Speicher dauerhaft ablegt und das Ansteuern des Lautsprechers zur Wiedergabe der Audioinformation auf Grundlage der in dem Speicher abgelegten Daten erfolgt. Ergänzend oder alternativ ist es denkbar, dass die Kontrolleinheit die aus dem Internet empfangenen Daten unmittelbar dazu verwendet, um den Lautsprecher zur Wiedergabe einer Audioinformation anzusteuern (sog. Streaming), wobei diese Ausführungsform auch das temporäre Zwischenspeichern der aus dem Internet empfangenen Daten in einem Zwischenspeicher umfassen kann.

Bei Ausführungsformen, die die Daten, die die Audioinformationen in einem bestimmten Datenformat enthalten, aus dem Internet empfangen, ist es bei der aus WO 2015/104222 A1 bekannten Vorrichtung beispielsweise denkbar, dass die Kontrolleinheit in einem Speicher eine bestimmte Serveradresse eines mit dem Internet verbundenen Servers vorhält und in einem Speicher eine Tabelle vorhält, in der eine jeweils bestimmte Eigenschaft oder eine jeweils bestimmte Änderung einer Eigenschaft einer jeweiligen Identifikationsnummer zugeordnet wird. Die Kontrolleinheit ist in einer solchen Ausführungsform dann dazu ausgebildet, um beim Erkennen der bestimmten Eigenschaft, bzw. der bestimmten Änderung der Eigenschaft mit dem konkreten Server zu kommunizieren und unter Rückgriff auf die der bestimmten Eigenschaft, bzw. der bestimmten Änderung der Eigenschaft zugeordneten Identifikationsnummer von dem Server einen bestimmten Datensatz herunterzuladen und für das Ansteuern des Lautsprechers zur Wiedergabe der sich aus diesen Daten ergebenden Audioinformation zu verwenden. Beispielsweise können auf dem Server Musiktitel als Daten in einem bestimmten Datenformat abgespeichert werden, wobei der jeweilige Musiktitel, bzw. die diesen Musiktitel enthaltenen Daten auf dem Server unter einem bestimmten Identifikationscode hinterlegt sind. In einer bevorzugten Ausführungsform enthält die erfindungsgemäße Vorrichtung bereits eine Zuordnungstabelle, die bestimmte Eigenschaften, bzw. Änderungen der Eigenschaften des Bereichs der Umgebung des Sensors einigen, einer Mehrzahl oder in einer bevorzugten Ausführungsform sogar allen Identifikationsnummern zuordnet, die auch auf der Datenbank des Servers verwendet werden. Damit wird die Kontrolleinheit in die Lage versetzt, gezielt Datensätze von dem Server herunterzuladen. Alternativ ist es denkbar, dass die Kontrolleinheit dazu ausgebildet ist, eine die festgestellte bestimmte Eigenschaft, bzw. eine die festgestellte bestimmte Änderung der Eigenschaft enthaltende Information an einen bestimmten Server zu übermitteln, der mit dem Internet verbunden ist. Die Zuordnung der erkannten bestimmten Eigenschaft, bzw. der erkannten bestimmten Änderung der Eigenschaft zu einer bestimmten Audioinformation kann dann auf dem Server erfolgen. Die Kontrolleinheit ist dann dazu ausgebildet, von dem gleichen oder einem anderen Server Daten zu empfangen, die die wiederzugebende Audioinformation enthalten. Der Server übermittelt die Daten an die erfindungsgemäße Vorrichtung, die er der ihm von der Kontrolleinheit übermittelten bestimmten Eigenschaft, bzw. der ihm von der Kontrolleinheit übermittelten bestimmten Änderung der Eigenschaft zugeordnet hat. Diese Ausführungsform vermeidet die Notwendigkeit des Vorhaltens einer Zuordnungstabelle in der erfindungsgemäßen Vorrichtung und erhöht damit die Flexibilität des Empfangs bestimmter, die Audioinformation enthaltender Daten auf Grundlage einer bestimmten, festgestellten Eigenschaft, bzw. einer bestimmten festgestellten Änderung einer Eigenschaft des Bereichs der Umgebung des Sensors. Eine solche Ausführungsform erlaubt es beispielsweise, die Anzahl der auf dem Server bereitgestellten Datensätze zu erhöhen, ohne dass eine Zuordnungstabelle in der Kontrolleinheit der erfindungsgemäßen Vorrichtung angepasst werden müsste.

### WÜRDIGUNG weiterer Stand der Technik

Vor diesem Hintergrund lag der Erfindung die Aufgabe zugrunde, ein Spielzeug, ein Verfahren und ein System vorzuschlagen, das ausgehend von dem aus WO 2015/104222 A1 bekannten Spielzeug, bzw. ausgehend von dem aus WO 2015/104222 A1 bekannten System, bzw. ausgehend von dem aus WO 2015/104222 A1 bekannten Verfahren deren Einsatzmöglichkeiten erhöht.

Diese Aufgabe wird durch ein Spielzeug gemäß Anspruch 1, das System gemäß Anspruch 3 sowie das Verfahren gemäß Anspruch 6 gelöst. Vorteilhafte Ausführungsformen sind in den Unteransprüchen und der hiernach folgenden Beschreibung wiedergegeben.

Die Erfindung geht von dem Grundgedanken aus, das Spielzeug, das in der nachfolgenden Beschreibung auch als "Vorrichtung", bzw. "Vorrichtung zur Wiedergabe einer Audioinformation" bezeichnet wird, mit einer Gerätekennung auszustatten und eine Einrichtung zum Aussenden eines von der Gerätekennung abhängigen Signals vorzusehen. Eine Gerätekennung ist die Kennung eines Prozessors oder eines Speicherchips. In einer bevorzugten Ausführungsform ist die Gerätekennung so gewählt, dass sie dazu geeignet ist, das Spielzeug gegenüber einer externen Kontrolleinheit eindeutig zu identifizieren.

Die Einrichtung zum Aussenden eines von der Gerätekennung abhängigen Signals kann ein kabelgebundenes Signal aussenden, beispielsweise wenn das Spielzeug über ein Kabel mit einer externen Kontrolleinheit verbunden ist. Die Einrichtung zum Aussenden eines von der Gerätekennung abhängigen Signals kann aber auch ein Funksignal aussenden, beispielsweise ein Signal nach einem NFC-Standard, einem Bluetooth-Standard oder einem WLAN-Standard, beispielsweise wenn das Spielzeug in ein Funknetzwerk eingebunden ist.

Das Vorsehen einer Gerätekennung und die Möglichkeit, ein von der Gerätekennung abhängiges Signal auszusenden, beispielsweise an eine externe Kontrolleinheit auszusenden, ermöglicht es, den weiteren Datenverkehr zwischen dem Spielzeug und einer externen Kontrolleinheit und/oder einem externen Speicher von dem Vorhandensein vorher festgelegter Berechtigungen abhängig zu machen. Weiter unten werden Ausführungsformen der Erfindung beschrieben, bei denen das Spielzeug genutzt werden, um Kontent (insbesondere Hörbücher, Musik oder andere Audioinformationen) wiederzugeben, wobei jedoch vor der Wiedergabe oder dem Ausführen zumindest ein Datenpaket von einem externen Speicher auf einen Speicher des Spielzeugs übertragen wird. Dieses Datenpaket kann ― je nach gewähltem Datensystem, bzw. je nach gewählter Datenstruktur ― den gesamten oder Teile des wiederzugebenden Kontents enthalten. Das Vorsehen einer Gerätekennung und die Möglichkeit, ein von der Gerätekennung abhängiges Signal auszusenden, kann nun dazu genutzt werden, eine von dem Spielzeug an die externe Kontrolleinheit und/oder den externen Speicher gerichtete Anforderung zur Übertragung eines Datenpakets davon abhängig zu machen, dass eine Berechtigungsprüfung ergibt, dass ein Spielzeug mit einer solchen Gerätekennung berechtigt ist, das Datenpaket zu empfangen.

Eine derartige Identifizierung des Spielzeugs in einem Netzwerk, bzw. in einem System kann genutzt werden, um die Übertragung von Datenpaketen an das Spielzeug gegenüber einem Benutzer des Spielzeugs abzurechnen. So kann das Übertragen einzelner Datenpakete, bspw. das Übertragen der für die Wiedergabe eines Hörbuchs notwendigen Datenpakete einzeln abgerechnet werden. Ebenso sind Flatrate-Berechnungssysteme denkbar. Oder die Kopplung der Möglichkeit, derartige Datenpakete herunterzuladen, an eine Zeit oder einen Zeitraum, beispielsweise im Sinne eines "Ausleihens eines Hörbuchs".

Eine derartige Identifizierung des Spielzeugs in einem Netzwerk, bzw. in einem System kann auch dazu genutzt werden, die Bedienung des Spielzeugs betreffende Steuerinformationen, die als Datenpaket in einem externen Speicher vorgehalten werden, bis sich das Spielzeug mit der entsprechenden Gerätekennung in dem System anmeldet, an eben genau dieses Spielzeug zu übertragen. Wird ein derartiges Spielzeug beispielsweise in ein System eingebunden, dass es Dritten, beispielsweise Eltern, ermöglichen soll, die Zeit der Nutzung des Spielzeugs oder die maximale Lautstärke des Abspielens einer Audioinformation über ein Programm auf einem Smartphone oder einem Tablet des Dritten zu begrenzen, so ist eine Ausführungsform denkbar, bei der die auf dem Smartphone oder dem Tablet erzeugten Beschränkungen als Datenpaket in einem externen Speicher, bzw. in einer externen Kontrolleinheit, bspw. einer Cloud zu speichern. Durch die Gerätekennung ist es möglich, dass der Dritte dem externen Speicher, bzw. der externen Kontrolleinheit mitteilt, für welches Spielzeug das Datenpaket vorgesehen ist. Meldet sich das Spielzeug mit dieser Gerätekennung an, so wird das Datenpaket dann an das Spielzeug übertragen.

Das erfindungsgemäße System sieht in einer bevorzugten Ausführungsform einen externen Speicher vor, von dem ein Datenpaket auf einen Speicher des Spielzeugs übertragen werden kann und/oder auf den ein Datenpaket von dem Spielzeug übertragen werden kann, wenn der Sensor innerhalb des Bereichs seiner Umgebung eine bestimmte Eigenschaft oder eine bestimmte Änderung einer Eigenschaft dieser Umgebung feststellt oder wenn die Kontrolleinheit eine bestimmte Änderung der von dem Sensor festgestellten Eigenschaft feststellt. Ein derartiger externer Speicher kann beispielsweise eine "Cloud" sein. Der externe Speicher kann bevorzugt so ausgebildet sein, dass er Datenpakete erst nach einer Berechtigungsprüfung überträgt, wobei weiter bevorzugt für die Berechtigungsprüfung Handshake-Verfahren, Verschlüsselungsverfahren, geheime und öffentliche Schlüssel oder eine Kombination einer Auswahl dieser Techniken eingesetzt werden. Für die die Berechtigungsprüfung kann zusätzlich auch die Gerätekennung verwendet werden.

Das erfindungsgemäße System sieht in einer bevorzugten Ausführungsform eine externe Kontrolleinheit vor, an die ein Datenpaket von dem Spielzeug übertragen werden kann, wenn der Sensor innerhalb des Bereichs seiner Umgebung eine bestimmte Eigenschaft oder eine bestimmte Änderung einer Eigenschaft dieser Umgebung feststellt oder wenn die Kontrolleinheit eine bestimmte Änderung der von dem Sensor festgestellten Eigenschaft feststellt. Eine derartige externe Kontrolleinheit kann beispielsweise ein Server sein. Dieser Server kann Teil eines Local Area Networks sein oder Teil des Internets sein.

Das erfindungsgemäße Verfahren sieht vor, dass ein Datenpaket von einem externen Speicher auf einen Speicher des Spielzeugs und/oder ein Datenpaket von dem Spielzeug an einen externen Speicher und/oder eine externe Kontrolleinheit übertragen wird, wenn der Sensor innerhalb des Bereichs seiner Umgebung eine bestimmte Eigenschaft oder eine bestimmte Änderung einer Eigenschaft dieser Umgebung feststellt oder wenn die Kontrolleinheit eine bestimmte Änderung der von dem Sensor festgestellten Eigenschaft feststellt.

Diese Erkenntnis kann sich dazu nutzen lassen, beispielsweise die Kommunikationszeiten zwischen dem Spielzeug und einem externen Speicher zu reduzieren. So kann es beispielsweise vorgesehen sein, dass in dem Fall, dass eine Kommunikationsverbindung zwischen dem Spielzeug und dem externen Speicher, bzw. der externen Kontrolleinheit zunächst nicht besteht, wenn der Sensor innerhalb des Bereichs seiner Umgebung eine bestimmte Eigenschaft oder eine bestimmte Änderung einer Eigenschaft seiner Umgebung feststellt oder wenn die Kontrolleinheit eine bestimmte Änderung der von dem Sensor festgestellten Eigenschaft feststellt, der Umstand, dass der Sensor innerhalb des Bereichs seiner Umgebung eine bestimmte Eigenschaft oder eine bestimmte Änderung einer Eigenschaft dieser Umgebung feststellt oder der Umstand, dass die Kontrolleinheit eine bestimmte Änderung der von dem Sensor festgestellten Eigenschaft feststellt, als auslösendes Ereignis für den Aufbau eines Kommunikationskanals zwischen dem Spielzeug und dem externen Speicher, bzw. der externen Kontrolleinheit genutzt wird.

Ein solches Vorgehen erlaubt es insbesondere auch, einen bestehenden Kommunikationskanal beim Eintreten eines bestimmten Ereignisses auch wieder zu schließen. Wird der Kommunikationskanal beispielsweise drahtlos, beispielsweise durch Funk bereitgestellt, so kann beim Erreichen eines bestimmten Ereignisses die Funkverbindung getrennt werden. Dadurch kann die Strahlung reduziert werden, der sich ein Nutzer des Spielzeugs ausgesetzt sieht. Das auslösende Ereignis kann beispielsweise das Entfernen einer Kennung von dem Spielzeug sein. Ebenso kann das auslösende Ereignis das Verstreichen eines vorher festgelegten Zeitintervalls sein (auch nach Entfernen einer Kennung). Mit diesen Maßnahmen kann eine gute Balance zwischen maximalen Bedienkomfort, der am ehesten bei einem dauerhaft bestehenden Kommunikationskanal zwischen dem externen Speicher, bzw. der externen Kontrolleinheit und dem Spielzeug gegeben ist, und dem Wunsch nach einer Reduktion der Strahlenbelastung gefunden werden.

Der externe Speicher kann in einem externen Computer vorgesehen sein, mit dem das Spielzeug über ein Kabel oder über eine Funkverbindung verbunden sein kann. Ein solcher Computer kann lokal vorhanden sein, beispielsweise in einem Heimnetzwerk, indem sich auch das Spielzeug befindet. Der externe Speicher kann jedoch auch ein Speicher sein, zu dem das Spielzeug über das Internet Kontakt aufnimmt, beispielsweise ein Speicher in einer sogenannten "Cloud".

Es ist zum Erreichen der Vorteile der Erfindung nicht notwendig, dass immer dann ein Datenpaket von einem externen Speicher auf einen Speicher des Spielzeugs übertragen wird, wenn der Sensor innerhalb des Bereichs seiner Umgebung eine bestimmte Eigenschaft oder eine bestimmte Änderung seiner Eigenschaft dieser Umgebung feststellt oder wenn die Kontrolleinheit eine bestimmte Änderung der von dem Sensor festgestellten Eigenschaft feststellt. So ist es in einer bevorzugten Ausführungsform des Verfahrens denkbar, dass das Spielzeug einen Speicher besitzt, in dem Datenpakete abgespeichert werden können und eine Kontrolleinheit des Spielzeugs weiß, welche Datenpakete in dem Speicher des Spielzeugs abgespeichert sind. In dieser bevorzugten Ausführungsform des Verfahrens wird ein Datenpaket nur dann von einem externen Speicher auf einen Speicher des Spielzeugs übertragen, wenn der Sensor innerhalb des Bereichs seiner Umgebung eine bestimmte Eigenschaft oder eine bestimmte Änderung einer Eigenschaft dieser Umgebung feststellt oder wenn die Kontrolleinheit eine bestimmte Änderung der von dem Sensor festgestellten Eigenschaft feststellt, wenn die Kontrolleinheit feststellt, dass das von dem externen Speicher auf einen Speicher des Spielzeugs zu übertragende Datenpaket nicht bereits in dem Speicher des Spielzeugs gespeichert ist. Dadurch kann der Austausch des Datenvolumens zwischen dem externen Speicher und dem Speicher des Spielzeugs reduziert werden.

Es sind Ausführungsformen denkbar, bei denen der externe Speicher Datenpakete vorhält, die in jedem Fall von dem externen Speicher auf einen Speicher des Spielzeugs übertragen werden sollen, wenn der Sensor innerhalb des Bereichs seiner Umgebung eine bestimmte Eigenschaft oder eine bestimmte Änderung einer Eigenschaft dieser Umgebung feststellt oder wenn die Kontrolleinheit eine bestimmte Änderung der von dem Sensor festgestellten Eigenschaft feststellt. Derartige Datenpakete können beispielsweise Softwareupdates für die von der Kontrolleinheit verwendete Software sein. Ebenso können derartige Datenpakete Steuerungsdatenpakete sein. Mit derartigen Steuerungsdatenpaketen kann beispielsweise eine maximale Lautstärke festgelegt werden, mit der das Spielzeug eine Audioinformation über einen Lautsprecher wiedergibt. Ein derartiges Steuerungsdatenpaket kann in einer bevorzugten Ausführungsform die Funktionsweise der Kontrolleinheit des Spielzeugs steuern. Beispielsweise kann über das Steuerungsdatenpaket festgelegt werden, wie lange die Kontrolleinheit eine Audioinformation wiedergibt. Dadurch kann eine zeitliche Nutzungsbeschränkung vorgenommen werden. Ebenso können mit dem Steuerungsdatenpaket die Wiedergabe bestimmter Audioinformationen gesperrt werden. Diese Sperrung kann generell erfolgen, so dass der jeweilige Kontent überhaupt nicht wiedergegeben werden kann, beispielsweise um Altersbeschränkungen einzuhalten. Derartige Sperrungen können jedoch auch temporär sein, um beispielsweise zu verhindern, dass über einen gewissen Zeitraum stets nur der eine Kontent wiedergeben wird.

In einer bevorzugten Ausführungsform ist vorgesehen, dass ein Datenpaket von dem Speicher des Spielzeugs auf den externen Speicher übertragen wird, wenn der Sensor innerhalb des Bereichs seiner Umgebung eine bestimmte Eigenschaft oder eine bestimmte Änderung einer Eigenschaft dieser Umgebung feststellt oder wenn die Kontrolleinheit eine bestimmte Änderung der von dem Sensor festgestellten Eigenschaft feststellt. Beispielsweise ist es denkbar, dass die Kontrolleinheit des Spielzeugs eine Statistik über ihre Nutzung, also insbesondere über die wiedergebebenen Audioinformationen führt, beispielsweise wie häufig der jeweilige Kontent wiedergeben wurde. Wird der Inhalt einer solchen Statistik als Datenpaket an den externen Speicher übertragen, so können beispielsweise Eltern, die Zugriff auf Daten aus dem externen Speicher haben, feststellen, welcher Kontent von ihren Kindern wie häufig genutzt wurde, wie lange überhaupt Kontent abgerufen wurde und andere statistischen Informationen, beispielsweise auch den Softwarestand der Kontrolleinheit oder den Ladezustand einer Batterie des Spielzeugs.

Das Datenpaket, das von einem externen Speicher auf den Speicher des Spielzeugs übertragen wird, kann einer Bibliothek von Datenbanken entspringen, die in dem externen Speicher vorgehalten werden. Diese Bibliothek kann von einem externen Dienstleister bereitgestellt werden, beispielsweise von Hörbuchverlagen. Es sind jedoch auch Ausführungsformen denkbar, bei denen das Datenpaket in dem externen Speicher ein mit einer Aufnahmesoftware individuell aufgenommenes Datenpaket sein kann. Die Aufnahmesoftware kann von einem Prozessor ausgeführt werden, der Teil des Computers ist, zu dem der externe Speicher gehört. Derartige Lösungen bieten sich für Heimnetzwerke an. Die Aufnahmesoftware kann jedoch auch auf einem externen Computer, beispielsweise auf einem Smartphone, einem Tabletcomputer, einem Laptop, einem Tischrechner oder einer Workstation ausgeführt werden und das so erzeugte Datenpaket über ein Netzwerk, insbesondere bevorzugt über das Internet in den externen Speicher, beispielsweise einer "Cloud" eingestellt werden, von dem aus es auf den Speicher des Spielzeugs übertragen wird. Dies erlaubt es einem Dritten Sprachnotizen aufzunehmen, beispielsweise Geschichten aufzunehmen und diese in dem externen Speicher bereitzuhalten. Das entsprechende Datenpaket kann von dem externen Speicher auf einen Speicher des Spielzeugs übertragen werden, wenn der Sensor innerhalb des Bereichs seiner Umgebung eine bestimmte Eigenschaft oder eine bestimmte Änderung einer Eigenschaft dieser Umgebung feststellt oder wenn die Kontrolleinheit eine bestimmte Änderung der von dem Sensor festgestellten Eigenschaft feststellt. Der externe Speicher kann dazu ausgebildet sein, eine schon vorhandene Aufnahme durch eine neue Aufnahme zu ersetzen. Wenn das Spielzeug bei dem externen Speicher Datenpakete anfordert, können der externe Speicher und das Spielzeug so ausgebildet sein, dass zunächst geprüft wird, ob in dem Spielzeug eine Kopie der Datenpakete bereits gespeichert ist. Diese Prüfung kann von dem Spielzeug ausgeführt werden, oder bevorzugt von dem externen Speicher. Davon abhängig kann beispielsweise entschieden werden, ob und welche Datenpakete von dem externen Speicher an das Spielzeug übertragen werden. Auf diese Weise kann mit Hilfe derselben Kennung über die Zeit unterschiedlicher Kontent abgerufen werden, beispielsweise sich überwiegend regelmäßig ändernder Kontent (wie z.B. sogenannte Podcasts) oder sich ereignisabhängig ändernder Kontent. Das Spielzeug kann in einer Ausführungsform dazu ausgebildet sein, zu vorbestimmten Zeiten selbsttätig zu prüfen, ob der einer bestimmten Kennung zugeordnete Kontent geändert wurde, und bevorzugt den neuen Kontent auch selbsttätig zu speichern, damit er bei der nächsten Erkennung der Kennung schneller zur Verfügung steht. Hierzu übermittelt das Spielzeug an den externen Speicher eine Information, dass die Anforderung selbsttätig erfolgt. Der externe Speicher kann dadurch diese Anforderungen anders verarbeiten als andere Anforderungen, beispielsweise im Hinblick auf die Priorität der Datenübermittlung.

Im Kontext der nachstehend weiter im Detail beschriebenen Ausführungsform, bei der der Sensor innerhalb des Bereichs seiner Umgebung eine bestimmte Eigenschaft oder eine bestimmte Änderung einer Eigenschaft dieser Umgebung feststellt oder wenn die Kontrolleinheit eine bestimmte Änderung der von dem Sensor festgestellten Eigenschaft feststellt, wenn eine Kennung, die in einem figürlichen Korpus angeordnet ist, in den Bereich der Umgebung des Sensors gebracht wird, bieten sich nunmehr verschiedene Vorgehensweisen, die insbesondere an die Formgebung der Figur gekoppelt sein können. So kann die Figur beispielsweise die Form eines Hauptdarstellers einer bestimmten Geschichte sein. Wird diese Figur mit ihrer Kennung in den Bereich des Sensors gebracht und stellt dieser innerhalb des Bereichs seiner Umgebung eine dieser Figur zugehörige bestimmte Eigenschaft oder eine dieser Figur zugehörige bestimmte Änderung einer Eigenschaft dieser Umgebung fest oder stellt die Kontrolleinheit eine bestimmte, dieser Figur zugeordnete Änderung der von dem Sensor festgestellte Eigenschaft fest, so kann ein Datenpaket von dem externen Speicher auf den Speicher des Spielzeugs geladen werden, das im Kontext zu dieser Hauptfigur steht. Dadurch können beispielsweise Hörspiele für Kinder heruntergeladen werden. Diese Ausführungsform bietet es jedoch auch an, figürliche Formen der Kennung zu wählen, die keiner Hauptfigur einer bekannten Geschichte zugeordnet sind, sogenannte Fantasiekennungen. Fantasiekennungen können beispielsweise auch Gegenständen oder Personen nachempfunden sein, und können weiter bevorzugt entweder mehrfach oder individuell hergestellt sein, beispielsweise mittels 3D-Drucktechniken. Stellt der Sensor innerhalb des Bereichs seiner Umgebung eine bestimmte, dieser Fantasiekennung zugeordnete Eigenschaft oder eine bestimmte, der Fantasiekennung zugeordnete Änderung einer Eigenschaft dieser Umgebung fest, oder stellt die Kontrolleinheit eine bestimmte, dieser Fantasiekennung zugeordnete

Änderung der von dem Sensor festgestellten Eigenschaft fest, so kann dies bewirken, dass von dem externen Speicher ein Datenpaket auf einen Speicher des Spielzeugs übertragen wird, welches Datenpaket vorher mittels einer Aufnahmesoftware aufgenommen wurde. Dadurch ergibt sich beispielsweise die Möglichkeit, dass Eltern oder Großeltern ihren Kindern bzw. ihren Enkelkindern Geschichten vorlesen oder Gute Nacht Geschichten aufnehmen, die die Kinder abhören können, wenn sie die Fantasiekennung in die Umgebung des Sensors bringen.

Zur Übertragung eines Datenpakets auf den externen Speicher kann eine Aufnahmesoftware eingesetzt werden, die
- Kontent aufnehmen kann oder anderweitig Kontent einlesen kann,
- diesen Kontent ganz oder teilweise über ein Netzwerk in einen externen Speicher übermitteln kann, und
- eine Zuordnung des Kontents zu einer oder mehreren bestimmten Kennung(en) oder Gruppe(n) von Kennungen vornehmen kann.

Die Aufnahmesoftware ermittelt hierfür ― einmalig oder wiederholt ― über eine Verbindung zu dem Spielzeug (entweder direkt oder über einen zwischengeschalteten Server) eine oder mehrere bestimmte Kennung(en) oder Gruppe(n) von Kennungen, die für die Zuordnung in Frage kommen, und lässt den Benutzer der Aufnahmesoftware vor oder nach der Aufnahme oder dem Einlesen bestimmen, welche der Kennung(en) die Aufnahme zugeordnet werden sollen. Die Ermittlung kann bevorzugt dadurch geschehen, dass ― wenn dem Benutzer der Aufnahmesoftware die Kennung zur Verfügung steht ― die Kennung in den Erkennungsbereich des Spielzeugs verbracht wird. Sie kann aber auch dadurch geschehen, dass, beispielsweise mittels eines Benutzerkontos, eine Beziehung zwischen dem Benutzer der Aufnahmesoftware (oder einer Benutzergruppe) und einer oder mehrerer Kennung(en) gespeichert ist. Sie kann ferner dadurch geschehen, dass eine Beziehung zwischen einem Benutzerkonto des Benutzers und einer Gerätekennung gespeichert ist, und die Kennung(en) der Gerätekennung zugeordnet sind. Die Zuordnung zum Benutzerkonto kann bevorzugt auch dadurch erreicht werden, dass eine individuelle Information, die mit der Kennung verknüpft ist, aber separat von ihr transportiert werden kann, in der Aufnahmesoftware oder einer anderen Software verwendet wird, die die Zuordnung zum Benutzerkonto vornehmen kann. Die individuelle Information kann beispielsweise ein alphanumerischer Code, ein Barcode oder ein QR-Code sein. Die genannten Zuordnungsmöglichkeiten können bevorzugt miteinander kombiniert werden, um größeren Komfort für den Benutzer der Aufnahmesoftware zu erreichen. Die Zuordnungen zu einem Benutzerkonto sind beispielsweise in einem externen Speicher oder im gleichen Gerät mit der Aufnahmesoftware gespeichert, bevorzugt an beiden Stellen. Eine Aufnahmesoftware kann insbesondere so gestaltet sein, dass sie auch ohne physikalischen Zugriff auf eine bestimmte Kennung eine Zuordnung zu dieser Kennung ermöglicht.

Die Aufnahmesoftware und der externe Speicher können ferner so ausgebildet sein, dass die Aufnahmesoftware vom Benutzer gewünschte Einschränkungen der Berechtigung für bestimmte Kennungen oder Gruppen von Kennungen an den externen Speicher übertragen kann, insbesondere für Fantasiekennungen. Diese Einschränkungen können durch zuvor beschriebene Steuerungsdatenpakete an ein Spielzeug übermittelt werden. Sie können aber auch (beispielsweise zusätzlich) in einer Berechtigungsprüfung vor dem Versenden von Datenpaketen durch den externen Speicher berücksichtigt werden.

Bevorzugt bietet die Aufnahmesoftware, um größeren Komfort zu erreichen, zugleich die zuvor beschriebenen Möglichkeiten, andere Steuerungsdatenpakete zu generieren, beispielsweise zur Lautstärkenbegrenzung.

Es ist auch denkbar, Datenpakete dauerhaft, insbesondere bevorzugt dauerhaft über eine gewisse Zeitspanne, von dem externen Speicher auf den Speicher des Spielzeugs zu übertragen, oder diese zu streamen. Beispielsweise können Datenpakete für eine Radioübertragung oder für das Fernsehen oder für das Wiedergeben von Filmen auf diese Weise von einem externen Speicher auf einen Speicher des Spielzeugs übertragen werden.

Die Erfindung geht von dem Grundgedanken aus, als Teil des Spielzeugs einen Sensor zu verwenden, der innerhalb eines Bereichs seiner Umgebung eine Eigenschaft oder eine Änderung einer Eigenschaft dieser Umgebung feststellen kann, sowie eine Kontrolleinheit vorzusehen, die die gewünschte Ansteuerung vornehmen kann, wenn der Sensor innerhalb des Bereichs seiner Umgebung eine bestimmte Eigenschaft oder eine bestimmte Änderung einer Eigenschaft dieser Umgebung feststellt. Eine diesen Sensor und diese Kontrolleinheit aufweisende Vorrichtung sowie ein einen solchen Sensor und eine solche Kontrolleinheit einsetzendes Verfahren führen zu einer besonders einfachen Bedienung. Zur Wiedergabe der gewünschten Information kann es erfindungsgemäß ausreichen, der Umgebung eine bestimmte, von dem Sensor feststellbare Eigenschaft zu geben, bzw. eine von dem Sensor feststellbare Änderung der Eigenschaft dieser Umgebung durchzuführen und damit ― in einer besonders bevorzugten Ausführungsform der Erfindung ― unmittelbar die Wiedergabe der gewünschten Information zu bewirken.

Das durch die Erfindung bereitgestellte, vereinfachte Bedienkonzept lässt sich besonders gut in einem Spielzeug zur Wiedergabe von Musik oder einer gesprochenen Geschichte umsetzen. In der nachfolgenden Beschreibung wird ― soweit nicht explizit Besonderheiten, die nur bei der Wiedergabe von Audioinformationen relevant sind, beschrieben werden ― die Erfindung stellvertretend für das Einsatzgebiete des Einsatzes als Spielzeug anhand des bevorzugten Einsatzgebiets der Wiedergabe von Audioinformationen beschrieben. Das Spielzeug stellt die beanspruchte Ausführungsform einer Vorrichtung zur Wiedergabe einer Audioinformation dar, die dadurch konkretisiert ist, dass die wiederzugebende Audioinformation Musik oder eine gesprochene Geschichte ist.

Die erfindungsgemäße Vorrichtung und das erfindungsgemäße Verfahren lassen sich - vergleichbar einem MP3-Spieler der herkömmlichen Art ― zur Wiedergabe von Audioinformationen einsetzen, die von auf dem MP3-Spieler gespeicherten Informationen ausgehen. Dadurch wird der Einsatz von CDs vermieden. Zugleich vereinfacht die Erfindung das Bedienkonzept der herkömmlichen MP3-Spieler. Bereits das Einstellen einer bestimmten Eigenschaft, bzw. einer bestimmten Änderung einer Eigenschaft der Umgebung des Sensors kann bei einer bevorzugten Ausführungsform der Erfindung zur sofortigen Wiedergabe der Audioinformation führen. Dadurch entfällt das bei herkömmlichen MP3-Spielern häufig insbesondere für Kinder umständliche Bedienkonzept. Dadurch werden die erfindungsgemäße Vorrichtung und das erfindungsgemäße Verfahren besonders gut geeignet für den Einsatz bei Kinderspielzeugen. Das vereinfachte Bedienkonzept bietet jedoch auch die Möglichkeit, Audioinformationen für Erwachsene besonders einfach wiederzugeben.

Ein Einsatzgebiet der Erfindung ist die Wiedergabe von Audioinformationen, insbesondere von Musikstücken, gesprochenen Texten oder der Kombination von Musikstücken und gesprochenen Texten. Diese Audioinformationen haben insbesondere bevorzugt eine Wiedergabedauer von mindestens 10s, vorzugsweise von mehr als 15s, insbesondere bevorzugt von mehr als 20s und besonders bevorzugt von mehr als 25s. Es ist in einer besonders bevorzugten Ausführungsform sogar vorgesehen, dass die Wiedergabedauer der Audioinformation mindestens 30s und besonders bevorzugt mehr als 1 min dauern kann. Beispielsweise haben Hörspiele, die insbesondere bevorzugt mit der Erfindung wiedergegeben werden sollen, häufig eine Länge von mehr als 5 min, teilweise auch von bis zu 30 min oder sogar mehr. Bei der erfindungsgemäß wiederzugebenden Audioinformation handelt es sich insbesondere nicht um ein Bestätigungssignal. Insbesondere handelt es sich bei der erfindungsgemäß wiederzugebenden Audioinformation nicht um einen Quittungston, der beispielsweise ausgegeben werden kann, wenn ein erstes Objekt relativ zu einem zweiten Objekt richtig ausgerichtet wurde. Ebenso handelt es sich bei der Audioinformation besonders bevorzugt nicht um ein Jingle, das abgespielt wird, wenn ein erstes Objekt in die Nähe eines zweiten Objekts gebracht wird oder in eine vorher festgelegte, bestimmte Position relativ zu dem zweiten Objekt gebracht wird. Die Erfindung befasst sich mit der Audioinformation, deren Wiedergabedauer länger andauert, wie dies bei Musikstücken oder gesprochenen Texten der Fall ist. Die Audioinformation ist insbesondere bevorzugt eine solche, bei deren Wiedergabe eine nicht periodische Reihenfolge von unterschiedlichen Tönen wiedergegeben wird.

Der Lautsprecher der erfindungsgemäßen Vorrichtung ist insbesondere bevorzugt ein Wandler, der elektrisch Signale in mechanische Schwingungen (Schall) umsetzen kann.

In einer bevorzugten Ausführungsform weist die erfindungsgemäße Vorrichtung mindestens zwei Lautsprecher auf, so dass eine Wiedergabe der Audioinformation in Stereo möglich wird.

Bei der erfindungsgemäßen Vorrichtung kann ein Sensor eingesetzt werden, der innerhalb eines Bereichs seiner Umgebung eine Eigenschaft feststellen kann. Ebenso kann ein Sensor eingesetzt werden, der innerhalb eines Bereichs seiner Umgebung eine Änderung einer Eigenschaft dieser Umgebung feststellen kann. Ebenso kann ein Sensor eingesetzt werden, der sowohl innerhalb eines Bereichs seiner Umgebung einer Eigenschaft feststellen kann als auch innerhalb eines Bereichs seiner Umgebung einer Änderung einer Eigenschaft dieser Umgebung feststellen kann.

Als vom Sensor festzustellende Eigenschaft eines Bereichs seiner Umgebung wird erfindungsgemäß auch das Vorhandensein einer vorzugsweise hinsichtlich ihrer Eigenschaften zeitlich invarianten elektromagnetischen Welle im Bereich der Umgebung des Sensors verstanden oder das Vorhandensein einer beispielsweise metallischen Struktur, die eine vorhandene elektromagnetische Welle beeinflusst. Es sind Ausführungsbeispiele denkbar, bei denen der Sensor derart ausgestaltet ist, das er das Vorhandensein einer bestimmten elektromagnetischen Welle feststellen kann, beispielsweise einer elektromagnetischen Welle mit einer bestimmten Geschwindigkeit, bestimmten Intensität, einer bestimmten Wellenimpedanz, einer bestimmten Wellenlänge und/oder einer bestimmten Frequenz erkennen kann. Der Sensor kann auch so ausgestaltet sein, dass er eine Struktur feststellen kann, die eine bestimmte elektromagnetische Welle beeinflussen kann, beispielsweise eine elektromagnetische Welle mit einer bestimmten Geschwindigkeit, bestimmten Intensität, einer bestimmten Wellenimpedanz, einer bestimmten Wellenlänge und/oder einer bestimmten Frequenz. Erkennt der Sensor eine derartige elektromagnetische Welle oder eine solche Struktur, kann er dies der Kontrolleinheit über ein Signal mitteilen. Ergänzend oder alternativ kann der Sensor derart ausgelegt sein, dass er die Geschwindigkeit, die Intensität, die Wellenimpedanz, die Wellenlänge und/oder die Frequenz messen kann und der Kontrolleinheit über ein Signal den jeweiligen Wert der erkannten Größe und/oder die Änderung der jeweils erkannten Größe mitteilen kann. Die vom Sensor erkannte elektromagnetische Welle ist insbesondere bevorzugt keine elektromagnetische Welle mit einer Wellenlänge, bzw. Frequenz in dem für das menschliche Auge sichtbaren Spektrum und/oder aus dem Infrarot-Spektrum. Die vom Sensor erkannte Beeinflussung durch eine Struktur betrifft insbesondere bevorzugt keine elektromagnetische Welle mit einer Wellenlänge, bzw. Frequenz in dem für das menschliche Auge sichtbaren Spektrum und/oder aus dem Infrarot-Spektrum. Die vom Sensor erkannte elektromagnetische Welle ist insbesondere bevorzugt keine elektromagnetische Welle eines WLAN-Funknetzwerks, insbesondere keine Welle eines Funknetzwerks nach einem Standard der IEEE-802.11-Familie. Die vom Sensor erkannte Beeinflussung durch eine Struktur betrifft insbesondere bevorzugt keine elektromagnetische Welle eines WLAN-Funknetzwerks, insbesondere keine Welle eines Funknetzwerks nach einem Standard der IEEE-802.11-Familie.

Als vom Sensor festzustellende Änderung einer Eigenschaft eines Bereichs seiner Umgebung wird insbesondere bevorzugt die Änderung einer Eigenschaft einer elektromagnetischen Welle verstanden. Während in dem zuvor stehenden Abschnitt das Vorhandensein einer bestimmten, vorzugsweise hinsichtlich ihrer Eigenschaften zeitlich invarianten elektromagnetischen Welle als vom Sensor festzustellende Eigenschaft des Bereichs seiner Umgebung beschrieben wurde, wird nachfolgend die Möglichkeit beschrieben, dass eine bestehende elektromagnetische Wellen angepasst werden kann und dadurch eine vom Sensor festzustellende Änderung einer Eigenschaft eines Bereichs seiner Umgebung erzeugt wird, auf deren Grundlage die Kontrolleinheit den Lautsprecher zur Wiedergabe der Audioinformation ansteuern kann. Eine elektromagnetische Welle kann beispielsweise von einem Lesegerät zum Kommunizieren mit einem passiven RFID-Transponder erzeugt werden und dadurch geändert werden, dass der passive RFID-Transponder in einen Bereich der Umgebung des Lesegeräts gebracht wird, in dem seine Anwesenheit die elektromagnetische Welle ändert. Die durch das Einbringen des RFID-Transponders herbeigeführte Änderung der elektromagnetischen Welle kann vom Sensor als Änderung einer Eigenschaft eines Bereichs seiner Umgebung erkannt werden. Die Möglichkeit, Änderungen einer elektromagnetischen Welle zu erkennen, ermöglicht es der Erfindung, die für das Ansteuern des Lautsprechers notwendige, bestimmte Änderung einer Eigenschaft des Bereichs der Umgebung des Sensors über ein Funksignale, bzw. eine modulierte Welle herbeizuführen. Insbesondere bevorzugt ist die elektromagnetische Welle, deren Änderung erkannt wird, keine elektromagnetische Welle eines WLAN-Funknetzwerks, insbesondere keine Welle eines Funknetzwerks nach einem Standard der IEEE-802.11-Familie.

In einer bevorzugten Ausführungsform stellt der Sensor eine Eigenschaft innerhalb eines Bereichs seiner Umgebung bzw. eine Änderung einer Eigenschaft innerhalb eines Bereichs seiner Umgebung ohne direkten elektrischen Kontakt mit einem die Eigenschaft, bzw. die Änderung bewirkenden Bauelement fest. In einer ergänzenden oder alternativen Ausführungsform stellt der Sensor eine Eigenschaft innerhalb eines Bereichs seiner Umgebung bzw. eine Änderung einer Eigenschaft innerhalb eines Bereichs seiner Umgebung ohne direkten mechanischen Kontakt mit einem die Eigenschaft, bzw. die Änderung bewirkenden Bauelement fest. Dies bietet für die erfindungsgemäße Vorrichtung den Vorteil, dass die Wiedergabe der Audioinformation bereits erfolgen kann, wenn der Bediener nur die Eigenschaft in der näheren Umgebung der Vorrichtung in vorbestimmter Weise einstellt, bzw. in vorbestimmter Weise ändert. Damit entfällt die Notwendigkeit, zur Wiedergabe der Audioinformation ein Objekt in einer bestimmten Weise in Kontakt mit der erfindungsgemäßen Vorrichtung zur Wiedergabe der Audioinformation zu bringen, beispielsweise ein Schlüsselelement in eine in der Vorrichtung vorgesehene Aufnahme einzubringen oder beispielsweise einen USB-Memory Stick in aus der Praxis bekannter Weise in eine USB-Aufnahmebuchse einzustecken.

Die erfindungsgemäße Vorrichtung und das erfindungsgemäße Verfahren können von ihrem Bedienkonzept her darauf aufbauen, dass der Sensor eine bestimmte, konkrete Eigenschaft oder eine bestimmte Änderung dieser Eigenschaft feststellt, bzw. darauf aufbauen, dass die Kontrolleinheit aus dem ihr von dem Sensor zugeführten Messsignal erkennt, dass innerhalb des Bereichs der Umgebung des Sensors bestimmte Eigenschaft vorhanden ist, bzw. eine bestimmte Änderung einer Eigenschaft vorhanden ist. Da in einer bevorzugten Ausführungsform die erfindungsgemäße Vorrichtung und das erfindungsgemäße Verfahren jedoch dazu eingesetzt werden sollen, eine Vielzahl unterschiedlicher Audioinformationen wiederzugeben und die Wahl der wiederzugebenden Audioinformation von dem Vorhandensein einer jeweils konkreten Eigenschaft, bzw. einer jeweils konkreten Änderung der Eigenschaft im Bereich der Umgebung des Sensors abhängen soll, besteht bei dieser Ausführungsform die Beschränkung, dass nur eine begrenzte Anzahl von Audioinformationen wiedergegeben werden können. Als Eigenschaft der Umgebung, bzw. als Änderung der Eigenschaft der Umgebung wird deshalb insbesondere auch eine modulierte Welle, insbesondere eine elektromagnetische Welle, insbesondere eine elektromagnetische Welle im Radiofrequenzbereich verstanden, insbesondere bevorzugt jedoch keine elektromagnetische Welle eines WLAN-Funknetzwerks, insbesondere keine Welle eines Funknetzwerks nach einem Standard der IEEE-802.11-Familie. Dadurch besteht für die erfindungsgemäße Vorrichtung die Möglichkeit, das Vorhandensein eines passiven RFID-Transponders in einem bestimmten Bereich der Umgebung des Sensors festzustellen und die Wiedergabe der Audioinformation beispielsweise dann vorzunehmen, wenn überhaupt ein RFID-Transponder im Bereich der Umgebung des Sensors vorhanden ist, bzw. eine Wiedergabe der Audioinformation dann vorzunehmen, wenn ein bestimmter RFID-Transponder im Bereich der Umgebung des Sensors festgestellt wird. Ebenso ist es in einer bevorzugten Ausführungsform vorgesehen, dass die von dem Sensor festzustellende Eigenschaft im Bereich seiner Umgebung, bzw. die von dem Sensor festzustellende Änderung der Eigenschaft des Bereichs seiner Umgebung durch einen aktiven RFID-Transponder herbeigeführt wird. Ebenso ist es denkbar, dass als Eigenschaft das Vorhandensein einer elektromagnetischen Welle nach dem Bluetooth-Standard oder das Vorhandensein einer elektromagnetischen Welle nach dem Near Field Communication-Standard (NFC) festgestellt wird. Ebenso ist es denkbar, dass die festzustellende Änderung der Eigenschaft des Bereichs der Umgebung des Sensors durch eine elektromagnetische Welle nach dem Bluetooth-Standard oder nach dem NFC-Standard bereitgestellt wird und vom Sensor festgestellt wird. In einer bevorzugten Ausführungsform ist der Sensor jedoch so ausgebildet, dass er das Vorhandensein einer elektromagnetischen Welle nach dem Bluetooth-Standard oder das Vorhandensein einer elektromagnetischen Welle nach dem Near Field Communication-Standard (NFC) nicht feststellen kann und/oder dass er die Änderung einer elektromagnetischen Welle nach dem Bluetooth-Standard oder nach dem NFC-Standard nicht feststellen kann.

Insbesondere bevorzugt wird über die elektromagnetische Welle eine Kennung übermittelt, mit der die Kontrolleinheit einen in einem Speicher der erfindungsgemäßen Vorrichtung oder auf einem Server abgelegten Datensatz identifizieren kann und auf Grundlage des Datensatzes den Lautsprecher zur Wiedergabe der Audioinformation ansteuern kann. Insbesondere bevorzugt übermittelt die elektromagnetische Welle keine Daten, die in einem von der Kontrolleinheit in ein gängiges und zur Ansteuerung des Lautsprechers geeignetes Audioformat, beispielweise mpeg3 oder wav umgewandelt werden können. In der bevorzugten Ausführungsform ist es Ziel, dass die elektromagnetische Welle einen Datensatz identifizierbar macht, beispielsweise durch Übertragen einer Kennung, aber den Datensatz nicht selbst überträgt. In einer alternativen Ausführungsform überträgt die elektromagnetische Welle die gesamten Daten der Audioinformation. Dadurch kann die Vorrichtung eine Audioinformation abspielen, die nicht vor der entsprechenden Feststellung durch den Sensor in der Vorrichtung gespeichert war. Alternativ überträgt die elektromagnetische Welle einen Teil der Daten, beispielsweise die Daten, die für die Wiedergabe der ersten Sekunden oder Minuten der Audioinformation benötigt werden, während die Daten, die für die Wiedergabe der weiteren Audioinformation benötigt werden, in einem Speicher der erfindungsgemäßen Vorrichtung oder auf einem Server abgelegt sind und über eine Kennung identifiziert werden können. In einer bevorzugten Ausführungsform dieser alternativen Ausführungsform überträgt die elektromagnetische Welle jedoch nur den Teil der Daten, die für die Wiedergabe der ersten Minute, insbesondere bevorzugt der ersten 30s, besonders bevorzugt der ersten 10s der Audioinformation benötigt werden, während die Daten, die für die Wiedergabe der weiteren Audioinformation benötigt werden, in einem Speicher der erfindungsgemäßen Vorrichtung oder auf einem Server abgelegt sind und über eine Kennung identifiziert werden können.

Der Sensor ist ein Lesegerät zum Kommunizieren mit einem passiven RFID-Transponders.

Die Vorrichtung kann eine Auflage, auf der ein Gegenstand dauerhaft platziert werden kann aufweisen, wobei der Sensor zumindest in einem Bereich oberhalb der Auflage eine Eigenschaft oder eine Änderung einer Eigenschaft dieses Bereichs feststellen kann, und/oder einer Befestigung, an der ein Gegenstand dauerhaft befestigt werden kann, wobei der Sensor zumindest in einem Bereich benachbart der Befestigung eine Eigenschaft oder eine Änderung einer Eigenschaft dieses Bereichs feststellen kann. So kann ein Gegenstand, beispielsweise ein nachstehend näher beschriebener Kennungsträger, so platziert werden, dass er sich im Feststellungsbereich des Sensors, in dem der Sensor eine Eigenschaft oder eine Änderung einer Eigenschaft dieses Bereichs feststellen kann, befindet. Das hat den Vorteil, dass der Gegenstand im Feststellungsbereich verbleiben kann, ohne dass der Gegenstand oder die Vorrichtung durch einen Benutzer dauerhaft festgehalten werden müssen. Die Befestigung kann beispielsweise durch einen Hänge-, Klick-, Magnet-, Drehmechanismus oder auf andere Weise ausgeführt sein.

Die Kontrolleinheit der erfindungsgemäßen Vorrichtung kann den Lautsprecher zur Wiedergabe der Audioinformation ansteuern, wenn der Sensor innerhalb des Bereichs seiner Umgebung eine bestimmte Eigenschaft oder eine bestimmte Änderung einer Eigenschaft dieser Umgebung feststellt oder die Kontrolleinheit eine bestimmte Änderung der von dem Sensor festgestellten Eigenschaft feststellt. In einer bevorzugten Ausführungsform erzeugt der Sensor ein Signal mit einem von der Kontrolleinheit feststellbaren Wert, wenn der Sensor innerhalb des Bereichs seiner Umgebung eine bestimmte Eigenschaft oder eine bestimmte Änderung einer Eigenschaft feststellt. Es ist beispielsweise auch denkbar, dass der Sensor nur dann ein Signal erzeugt, das der Kontrolleinheit zugeführt wird, wenn der Sensor innerhalb des Bereichs seiner Umgebung eine bestimmte Eigenschaft oder eine bestimmte Änderung einer Eigenschaft dieser Umgebung feststellt. Solche Ausführungsformen führen dazu, dass der Sensor bereits die Auswertung vornimmt und entweder nur dann ein Signal der Kontrolleinheit zuführt, wenn er eine bestimmte Eigenschaft oder eine bestimmte Änderung einer Eigenschaft der Umgebung feststellt, oder aber der Kontrolleinheit ein dauerhaftes Signal mit einem bestimmten Wert zuführt, das auf einen bestimmten anderen, von der Kontrolleinheit feststellbaren, Wert geändert wird, wenn der Sensor innerhalb des Bereichs seiner Umgebung eine bestimmte Eigenschaft oder eine bestimmte Änderung einer Eigenschaft dieser Umgebung feststellt. Ergänzend oder alternativ ist es denkbar, dass die Kontrolleinheit die Auswertung vornimmt. Bei einer solchen Ausführungsform führt der Sensor der Kontrolleinheit dauerhaft ein Messsignal zu. Die Kontrolleinheit ist dazu ausgeführt, beispielsweise durch Hinterlegung einer Wertetabelle, aus dem ihr von dem Sensor zugeführten Messsignal zu erkennen, ob innerhalb des Bereichs der Umgebung des Sensors eine bestimmte Eigenschaft oder eine bestimmte Änderung einer Eigenschaft vorliegt. Dabei wird als Änderung der Eigenschaft der Umgebung des Sensors nicht nur das einmalige Auftreten einer bestimmten Änderung verstanden, beispielsweise das einmalige Auftreten einer Änderung der Feldrichtung des Magnetfelds in der Umgebung des Sensors in eine bestimmte Richtung, sondern auch eine zeitliche Abfolge von Eigenschaften im Bereich der Umgebung des Sensors, bzw. eine bestimmte Abfolge von Änderungen der Eigenschaften der Umgebung des Sensors, beispielsweise wie dies beim Auslesen von modulierten Wellen oder beim Auswerten von elektromagnetischen Wellen der Fall ist.

In einer bevorzugten Ausführungsform steuert die Kontrolleinheit den Lautsprecher zur Wiedergabe der Audioinformation nur dann an, wenn der Sensor innerhalb des Bereichs seiner Umgebung eine bestimmte Änderung einer Eigenschaft dieser Umgebung in Form einer bestimmten Abfolge von Änderungen der Eigenschaften feststellt, bzw. wenn die Kontrolleinheit eine bestimmte Änderung der von dem Sensor festgestellten Eigenschaft in Form einer bestimmten Abfolge von Änderungen der Eigenschaften feststellt. Diese Abfolge von Änderungen kann nach Art einer Zeichenkette (eines String) gestaltet sein. Diese Zeichenkette (dieser String) kann beispielsweise an eine bestimmten Platz die Information über die wiederzugebende Audioinformation enthalten und an einem anderen bestimmten Platz ein Kennungswort, das als Kopierschutz oder zur Authentifizierung fungieren kann. Enthält die Abfolge von Änderungen nach Art der Zeichenkette zwar die Information über die wiederzugebende Audioinformation aber nicht das Kennungswort, steuert die Kontrolleinheit den Lautsprecher nicht an. Alternativ zum Kennungswort kann die Zeichenkette auch ein von der Kontrollvorrichtung zur Verifikation ausführbare Befehlsfolge eines Programms (einer Software) sein.

In einer Ausführungsform kann die Kontrolleinheit zusätzlich zu der Ansteuerung des Lautsprechers zur Wiedergabe der Audioinformation auch die Art der Wiedergabe der Audioinformation ändern, beispielsweise die Lautstärke der Wiedergabe wenn der Sensor innerhalb des Bereichs seiner Umgebung eine bestimmte Eigenschaft oder eine bestimmte Änderung einer Eigenschaft dieser Umgebung feststellt oder wenn die Kontrolleinheit eine bestimmte Änderung der von dem Sensor festgestellten Eigenschaft feststellt. So kann die Kontrolleinheit den Lautsprecher in Abhängigkeit von diesem Winkel ansteuern, in dem sich ein Kennungsträger relativ zum Sensor befindet. Beispielsweise kann durch eine Veränderung des Winkels die Wiedergabe-Lautstärke angepasst werden.

In einer bevorzugten Ausführungsform weist die Vorrichtung einen Speicher auf, in dem Daten hinterlegt sind, aufgrund derer die Kontrolleinheit den Lautsprecher zur Wiedergabe der Audioinformation ansteuern kann. Die Daten beinhalten insbesondere bevorzugt die Audioinformation in dem bestimmten Datenformat, beispielsweise einem MP3-Format oder einem WAV-Format. Es sind Ausführungsformen denkbar, bei denen der Speicher nur Daten einer einzigen Audioinformation aufweist. Die erfindungsgemäße Vorrichtung kann bei einer solchen Ausführungsform dazu eingesetzt werden, bei entsprechendem Einstellen der Eigenschaft des Bereichs der Umgebung des Sensors, bzw. bei entsprechendem Einstellen der Änderung der Eigenschaft des Bereichs der Umgebung des Sensors eine einzige Audioinformation wiederzugeben, deren Wiedergabedauer insbesondere bevorzugt mindestens 10s dauert. In einer bevorzugten Ausführungsform sind in dem Speicher Daten verschiedener Audioinformationen abgelegt. Insbesondere bevorzugt ist bei einer solchen Ausführungsform die Kontrolleinheit derart ausgestaltet, dass sie, wenn der Sensor innerhalb des Bereichs seiner Umgebung eine bestimmte erste Eigenschaft oder eine bestimmte erste Änderung einer Eigenschaft dieser Umgebung feststellt oder die Kontrolleinheit eine bestimmte erste Änderung der von dem Sensor festgestellten Eigenschaft feststellt, den Lautsprecher zur Wiedergabe einer ersten Audioinformation, deren Wiedergabe insbesondere bevorzugt mindestens 10s dauert, ansteuert, während die Kontrolleinheit den Lautsprecher zur Wiedergabe einer zweiten Audioinformation, deren Wiedergabe insbesondere bevorzugt mindestens 10s dauert, ansteuert, wenn der Sensor innerhalb des Bereichs seiner Umgebung eine bestimmte zweite Eigenschaft oder eine bestimmte zweite Änderung einer Eigenschaft dieser Umgebung feststellt oder die Kontrolleinheit eine bestimmte zweite Änderung der von dem Sensor festgestellten Eigenschaft feststellt. Dadurch wird es möglich durch die bestimmte Beeinflussung der Eigenschaft des Bereichs der Umgebung des Sensors oder durch eine bestimmte Beeinflussung der Änderung der Eigenschaft dieser Umgebung des Sensors festzulegen, welche Audioinformation einer Mehrzahl von Audioinformationen die Vorrichtung wiedergibt. Beispielsweise kann die Vorrichtung eine bestimmte erste Audioinformation wiedergeben, wenn das Vorhandensein eines ersten RFID-Transponders in den Bereich der Umgebung des Sensors festgestellt wird, während die Vorrichtung eine zweite Audioinformation wiedergeben kann, wenn das Vorhandensein eines zweiten RFID-Transponders in den Bereich der Umgebung des Sensors festgestellt wird.

In einer bevorzugten Ausführungsform sind die Daten einer Audioinformation als Datensatz mit getrennt auslesbaren Datenfolgen abgelegt, um beispielsweise ein Hörbuch in Form von einzelnen Kapiteln wiederzugeben, bzw. die einzelnen Kapitel eines Hörbuchs ansteuerbar zu machen. Jede Datenfolge eines Datensatzes kann in einer bevorzugten Ausführungsform separat ausgelesen und zur Ansteuerung des Lautsprechers verwendet werden.

In einer bevorzugten Ausführungsform weist die Vorrichtung eine Einheit zum Empfangen von Daten aus dem Internet und/oder zum Senden von Daten ins Internet auf, insbesondere bevorzugt eine Antenne für ein Wireless Local Area Network (WLAN), eine mobile Datenfunktechnologie wie beispielsweise LTE, UMTS oder deren Vorgänger oder Nachfolger oder eine Anschlussbuchse für den Anschluss eines Kabels eines lokalen Netzwerks, das auch einen Internetzugang aufweist, beispielsweise eine Anschlussbuchse für ein Ethernet-Kabel. Durch das Vorhandensein einer Einheit zum Empfangen von Daten aus dem Internet besteht die Möglichkeit, dass die Kontrolleinheit die Daten, die die wiederzugebende Audioinformation in einem bestimmten Datenformat enthalten, aus dem Internet herunterlädt. Auf diese Weise kann die Vorrichtung eine Audioinformation abspielen, die nicht in der Vorrichtung gespeichert war, bevor der Sensor innerhalb des Bereichs seiner Umgebung eine bestimmte Eigenschaft oder eine bestimmte Änderung einer Eigenschaft dieser Umgebung feststellt oder die Kontrolleinheit eine bestimmte Änderung der von dem Sensor festgestellten Eigenschaft feststellt. Dabei kann die Kontrolleinheit derart ausgebildet sein, dass sie die Daten aus dem Internet empfängt und in einem Speicher dauerhaft ablegt und das Ansteuern des Lautsprechers zur Wiedergabe der Audioinformation auf Grundlage der in dem Speicher abgelegten Daten erfolgt. Ergänzend oder alternativ ist es denkbar, dass die Kontrolleinheit die aus dem Internet empfangenen Daten unmittelbar dazu verwendet, um den Lautsprecher zur Wiedergabe einer Audioinformation anzusteuern (sog. Streaming), wobei diese Ausführungsform auch das temporäre Zwischenspeichern der aus dem Internet empfangenen Daten in einem Zwischenspeicher umfassen kann.

Bei Ausführungsformen, die die Daten, die die Audioinformationen in einem bestimmten Datenformat enthalten, aus dem Internet empfangen, ist es beispielsweise denkbar, dass die Kontrolleinheit in einem Speicher eine bestimmte Serveradresse eines mit dem Internet verbundenen Servers vorhält und in einem Speicher eine Tabelle vorhält, in der eine jeweils bestimmte Eigenschaft oder eine jeweils bestimmte Änderung einer Eigenschaft einer jeweiligen Identifikationsnummer zugeordnet wird. Die Kontrolleinheit ist in einer solchen Ausführungsform dann dazu ausgebildet, um beim Erkennen der bestimmten Eigenschaft, bzw. der bestimmten Änderung der Eigenschaft mit dem konkreten Server zu kommunizieren und unter Rückgriff auf die der bestimmten Eigenschaft, bzw. der bestimmten Änderung der Eigenschaft zugeordneten Identifikationsnummer von dem Server einen bestimmten Datensatz herunterzuladen und für das Ansteuern des Lautsprechers zur Wiedergabe der sich aus diesen Daten ergebenden Audioinformation zu verwenden. Beispielsweise können auf dem Server Musiktitel als Daten in einem bestimmten Datenformat abgespeichert werden, wobei der jeweilige Musiktitel, bzw. die diesen Musiktitel enthaltenen Daten auf dem Server unter einem bestimmten Identifikationscode hinterlegt sind. In einer bevorzugten Ausführungsform enthält die erfindungsgemäße Vorrichtung bereits eine Zuordnungstabelle, die bestimmte Eigenschaften, bzw. Änderungen der Eigenschaften des Bereichs der Umgebung des Sensors einigen, einer Mehrzahl oder in einer bevorzugten Ausführungsform sogar allen Identifikationsnummern zuordnet, die auch auf der Datenbank des Servers verwendet werden. Damit wird die Kontrolleinheit in die Lage versetzt, gezielt Datensätze von dem Server herunterzuladen. Alternativ ist es denkbar, dass die Kontrolleinheit dazu ausgebildet ist, eine die festgestellte bestimmte Eigenschaft, bzw. eine die festgestellte bestimmte Änderung der Eigenschaft enthaltende Information an einen bestimmten Server zu übermitteln, der mit dem Internet verbunden ist. Die Zuordnung der erkannten bestimmten Eigenschaft, bzw. der erkannten bestimmten Änderung der Eigenschaft zu einer bestimmten Audioinformation kann dann auf dem Server erfolgen. Die Kontrolleinheit ist dann dazu ausgebildet, von dem Server Daten zu empfangen, die die wiederzugebende Audioinformation enthalten. Der Server übermittelt die Daten an die erfindungsgemäße Vorrichtung, die er der ihm von der Kontrolleinheit übermittelten bestimmten Eigenschaft, bzw. der ihm von der Kontrolleinheit übermittelten bestimmten Änderung der Eigenschaft zugeordnet hat. Diese Ausführungsform vermeidet die Notwendigkeit des Vorhaltens einer Zuordnungstabelle in der erfindungsgemäßen Vorrichtung und erhöht damit die Flexibilität des Empfangs bestimmter, die Audioinformation enthaltender Daten auf Grundlage einer bestimmten, festgestellten Eigenschaft, bzw. einer bestimmten festgestellten Änderung einer Eigenschaft des Bereichs der Umgebung des Sensors. Eine solche Ausführungsform erlaubt es beispielsweise, die Anzahl der auf dem Server bereitgestellten Datensätze zu erhöhen, ohne dass eine Zuordnungstabelle in der Kontrolleinheit der erfindungsgemäßen Vorrichtung angepasst werden müsste.

In einer bevorzugten Ausführungsform ist die Kontrolleinheit dazu ausgebildet, den Lautsprecher zur Wiedergabe der Audioinformation unmittelbar anzusteuern. Insbesondere bevorzugt müssen der Kontrolleinheit zum Ansteuern des Lautsprechers zur Wiedergabe der Audioinformation keine weiteren Startsignale zugeführt werden. Es ist hierbei allerdings denkbar, dass die Kontrolleinheit die Ansteuerung des Lautsprechers zur Wiedergabe der Audioinformation durch ein Verzögerungsglied verzögert.

In einer bevorzugten Ausführungsform weist die erfindungsgemäße Vorrichtung kein Bedienelement auf, mit dem ein Bediener das Ansteuern des Lautsprechers zur Wiedergabe der Audioinformation durch die Kontrolleinheit beeinflussen könnte, wenn der Sensor innerhalb des Bereichs seiner Umgebung eine bestimmte Eigenschaft oder eine bestimmte Änderung einer Eigenschaft dieser Umgebung feststellt oder die Kontrolleinheit eine bestimmte Änderung der von dem Sensor festgestellten Eigenschaft feststellt. Bei dieser Ausführungsform ist es denkbar, dass Bedienelemente vorgesehen sind, um der Kontrolleinheit andere Befehle, als die für das erstmalige Ansteuern des Lautsprechers zur Wiedergabe der Audioinformation zukommen zu lassen, beispielsweise Bedienelemente zum Einstellen der Lautstärke der Wiedergabe der Audioinformation über den Lautsprecher.

Ebenso ist es denkbar, dass Bedienelemente vorgesehen sind, um bei der Wiedergabe einer Audioinformation, die aufgrund von Daten eines Datensatzes mit getrennt auslesbaren Datenfolge wird, von einem ersten Kapitel zu einem nächsten Kapitel zu springen. Auch ist es bei dieser Ausführungsform denkbar, dass ein Bedienelement vorgesehen ist, mit dem ein Bediener nach dem erstmaligen Ansteuern des Lautsprechers zur Wiedergabe der Audioinformation durch die Kontrolleinheit die Wiedergabe unterbrechen kann. In einer bevorzugten Ausführungsform ist deshalb zwar ein Bedienelement vorgesehen. Die Kontrolleinheit kann in dieser Ausführungsform jedoch den Lautsprecher zur Wiedergabe der Audioinformation allein dadurch ansteuern, dass der Sensor innerhalb des Bereichs seiner Umgebung eine bestimmte Eigenschaft oder eine bestimmte Änderung einer Eigenschaft dieser Umgebung feststellt und ohne dass ein Bediener das Bedienelement bedient.

In einer alternativen Ausführungsform weist die Vorrichtung ein Bedienelement auf und ist die Kontrolleinheit derart ausgelegt, dass die Kontrolleinheit den Lautsprecher zur Wiedergabe der Audioinformation erst dann ansteuert, wenn die Kontrolleinheit ein vorbestimmtes Signal von diesem Bedienelement erhält. Beispielsweise kann dieses Bedienelement den Startbefehl zur Ansteuerung des Lautsprechers zur Wiedergabe der Audioinformation geben. In einer besonders bevorzugten Ausführungsform ist dieser Startbefehl jedoch der einzige Startbefehl, der zum Start der Ansteuerung des Lautsprechers zur Wiedergabe der Audioinformation notwendig ist. Insbesondere bevorzugt ist es bei dieser Ausführungsform nicht vorgesehen, dass mit diesem oder einem weiteren Bedienelement weitere Befehlssignale erzeugt werden, die der Kontrolleinheit zugeführt werden müssen, bevor diese den Lautsprecher zur Wiedergabe der Audioinformation ansteuert. Insbesondere bevorzugt sind keine Bedienelemente vorgesehen, mit denen aus einer Mehrzahl von in einem Speicher der Vorrichtung hinterlegten Daten für Audioinformationen ein Datensatz zur Wiedergabe ausgewählt wird. Insbesondere bevorzugt wird bei dieser Ausführungsform der wiederzugebende Datensatz allein auf Grundlage der durch den Sensor festgestellten bestimmten Eigenschaft, bzw. der durch den Sensor festgestellten bestimmten Änderung der Eigenschaft des Bereichs der Umgebung des Sensors, bzw. auf Grundlage der von der Kontrolleinheit festgestellten bestimmten Änderung der von dem Sensor festgestellten Eigenschaft ausgewählt. Eine solche Ausführungsform vereinfacht die Bedienung insbesondere im Vergleich zu aus dem Stand der Technik bekannten MP3-Spieler, bei denen zur Wiedergabe einer bestimmten Audioinformation die Audioinformation zunächst aus einer Liste ausgewählt werden muss.

In einer bevorzugten Ausführungsform kann die Kontrolleinheit derart ausgebildet sein, dass sie die Ansteuerung des Lautsprechers zur Wiedergabe der Audioinformation unterbricht, sobald der Sensor innerhalb des Bereichs seiner Umgebung die bestimmte Eigenschaft oder die bestimmte Änderung der Eigenschaft nicht mehr feststellt, bzw. die Kontrolleinheit die bestimmte Änderung der von dem Sensor festgestellten Eigenschaft nicht mehr feststellt. Die Unterbrechung kann insbesondere bevorzugt sofort, zeitverzögert oder durch eine graduelle Reduktion der Lautstärke bewirkt werden. Dadurch kann beispielsweise bewirkt werden, dass wenn ein in einer bevorzugten Ausführungsform verwendeter RFID-Transponder aus dem Bereich der Umgebung des Sensors entfernt wird, die Wiedergabe der Audioinformation unterbrochen wird. Alternativ ist es denkbar, die Kontrolleinheit derart auszugestalten, dass die Wiedergabe der Audioinformation fortgeführt wird, selbst wenn der Sensor innerhalb des Bereichs seiner Umgebung die bestimmte Eigenschaft oder die bestimmte Änderung der Eigenschaft nicht mehr feststellt, bzw. die Kontrolleinheit die bestimmte Änderung der von dem Sensor festgestellten Eigenschaft nicht mehr feststellt.

In einer bevorzugten Ausführungsform weist die Vorrichtung eine Antenne für ein Wireless Local Area Network (WLAN) auf, die ausgeschaltet werden kann. Insbesondere wenn die erfindungsgemäße Vorrichtung zur Wiedergabe der Audioinformation von Kindern verwendet werden soll, kann ein Interesse daran bestehen, die im Umfeld des Kindes erzeugten elektromagnetischen Wellen zu reduzieren. Hierfür kann es zweckmäßig sein, die WLAN-Antenne auszuschalten.

In einer bevorzugten Ausführungsform ist die erfindungsgemäße Vorrichtung würfelförmig ausgebildet. Die erfindungsgemäße Vorrichtung kann auch andere Formen aufweisen, beispielsweise kugelförmig oder kann beispielsweise die Form von bei Kindern besonders bevorzugten, größeren Objekten einnehmen, wie beispielsweise die Form eines Schiffs, einer Lokomotive, eines Hauses oder eines Tiers, wie beispielsweise eines Elefanten.

In einer bevorzugten Ausführungsform weist die Vorrichtung eine Aufnahme für einen Kennungsträger auf, die optisch, haptisch und/oder durch eine Absetzung in der Oberfläche, beispielsweise eine Mulde oder Erhöhung, kenntlich gemacht ist. In einer bevorzugten Ausführungsform sieht die Vorrichtung vor, den Kennungsträger mechanisch oder magnetisch lösbar zu fixieren. Wie nachstehend im Zusammenhang mit dem erfindungsgemäßen System näher beschrieben, wird die erfindungsgemäße Vorrichtung insbesondere bevorzugt als Teil eines Systems eingesetzt, bei dem die Vorrichtung mit einem Kennungsträger zusammenwirkt, bei der der Kennungsträger eine Eigenschaft hat, die der Sensor feststellen kann, wenn sich der Kennungsträger innerhalb des Bereichs der Umgebung des Sensors befindet, oder der Kennungsträger eine Eigenschaft der Umgebung des Sensors ändert und der Sensor diese Änderung feststellen kann. Wird die erfindungsgemäße Vorrichtung mit einer kenntlich gemachten Aufnahme ausgebildet, so besteht die Möglichkeit, den Kennungsträger in dieser Aufnahme zu positionieren. Durch das Vorsehen einer Aufnahme kann ferner ein Bereich abgegrenzt werden, innerhalb dessen der Sensor ausgelegt ist, um in diesem Bereich seiner Umgebung eine bestimmte Eigenschaft oder eine bestimmte Änderung einer Eigenschaft festzustellen. Das Vorsehen einer Aufnahme ermöglicht es, die erfindungsgemäße Vorrichtung in einer bevorzugten Ausführungsform so auszulegen, dass der Sensor die Eigenschaft seiner Umgebung nur in dem Bereich der Aufnahme feststellen kann, bzw. die Änderung einer Eigenschaft dieser Umgebung nur in dem Bereich der Aufnahme feststellen kann. Damit kann eine unerwünschte Fehlbedienung ausgeschlossen werden. Bei dem nachstehend näher beschriebenen erfindungsgemäßen System kann der Sensors sogar so ausgelegt werden, dass die Kontrolleinheit den Lautsprecher zur Wiedergabe einer Audioinformation nur dann ansteuert, wenn der Kennungsträger in der Aufnahme positioniert wird.

In einer bevorzugten Ausführungsform weist die Vorrichtung ein Bedienelement in Form einer Wippe auf, mit dem die Lautstärke der Wiedergabe der Audioinformation beeinflusst werden kann, indem die Wippe in einer ersten Stellung ein erstes Signal an die Kontrolleinheit sendet, beispielsweise ein Signal zum Erhöhen der Lautstärke der Wiedergabe der Audioinformation, und die Wippe in einer zweiten Stellung ein zweites Signal an die Kontrolleinheit sendet, beispielsweise ein Signal zur Reduktion der Lautstärke der Wiedergabe der Audioinformation. Ferner kann eine solche Wippe eine neutrale Mittelstellung aufweisen, in der kein die Lautstärke beeinflussendes Signal an die Kontrolleinheit gesendet wird. Alternativ ist es denkbar, dass die Vorrichtung ein erstes Bedienelement aufweist, mit dem Signale zum Erhöhen der Lautstärke der Wiedergabe der Audioinformation an die Kontrolleinheit übermittelt werden können, und die Vorrichtung ein zweites Bedienelement aufweist, mit dem Signale zur Reduktion der Lautstärke der Wiedergabe der Audioinformation an die Kontrolleinheit gesendet werden können. In einer besonders bevorzugten Ausführungsform ist das die Erhöhung der Lautstärke beeinflussende Bedienelement größer ausgebildet, als das die Reduktion der Lautstärke der Wiedergabe der Audioinformation beeinflussende Bedienelement. In einer besonders bevorzugten Ausführungsform weisen die beiden Bedienelemente die Form von Ohren auf, die an einem Gehäuse eines Grundkörpers der Vorrichtung angebracht sind, beispielsweise von dem Gehäuse abstehen. Die ohrenförmigen Bedienelemente können das von ihnen zu erzeugende Signal zur Beeinflussung der Lautstärke der Wiedergabe der Audioinformation bei Durchführen einer Druckbewegung oder Knickbewegung abgeben. Das hat den Vorteil, dass der Benutzer die Funktion der Bedienelemente erkennen kann, ohne auf Sprachkenntnisse angewiesen zu sein.

In einer bevorzugten Ausführungsform weist die erfindungsgemäße Vorrichtung ein Display auf. Dieses Display kann insbesondere eine E-Ink-Anzeige sein. Das Display kann auch ein berührungsempfindliches Display sein. Ergänzend oder alternativ kann die Vorrichtung eine LED oder eine Sequenz von LEDs aufweisen.

In einer bevorzugten Ausführungsform weist die Vorrichtung einen Näherungssensor, einen Bewegungssensor (Beschleunigungssensor), einen Sensor für Umgebungslicht, einen Feuchtigkeitssensor, einen Neigungssensor, einen GPS-Sensor und/oder einen gyroskopischen Sensor auf. Derartige Sensoren erlauben es, weitere Bedienbefehle für die Kontrolleinheit zu erzeugen. Beispielsweise kann eine derart ausgebildete Vorrichtung ein Schütteln erkennen und daraus ein Bediensignal für die Kontrolleinheit erzeugen. Beispielsweise kann ein Schütteln der Vorrichtung dazu eingesetzt werden, Daten verschiedener Audioinformationen in zufälliger Reihenfolge wiederzugeben. Ebenso kann eine derart ausgebildete Vorrichtung erkennen, ob von links oder von rechts ein leichter Schlag auf die Vorrichtung ausgeübt wird. Dies kann beispielsweise dazu eingesetzt werden, innerhalb eines Datensatzes zu dem nächsten Kapitel oder zu einem vorherigen Kapitel zu springen. Ebenso kann eine derart ausgestaltete Vorrichtung erkennen, ob sie geworfen wird. Auch hieraus können Bediensignale erzeugt werden.

In einer bevorzugten Ausführungsform weist die Vorrichtung einen Sensor auf, der ein von dem Abstand zwischen einem in dem Bereich der Aufnahme platzierten Objekt und der Aufnahme abhängiges Signal erzeugen kann, beispielsweise einen UltraschallSensor. Dadurch wird es möglich, in einer bevorzugten Ausführungsform der Vorrichtung die Ansteuerung des Lautsprechers von diesem Signal abhängig zu machen, beispielsweise davon, dass das Objekt die Aufnahme berührt oder fast berührt. Des Weiteren wird dadurch in einer ergänzenden oder alternativen Ausführungsform ermöglicht, auf eine Veränderung des Abstands hin weitere Bedienbefehlen zu erzeugen. Beispielsweise kann ein kurzes Entfernen und wieder Abstellen des Objekts dazu eingesetzt werden, innerhalb eines Datensatzes zu dem nächsten Kapitel zu springen.

Eine derart ausgerichtete Vorrichtung kann erkennen, ob sie vertikal gekippt wird oder ob sie horizontal gekippt wird. Auch diese Signale können zum Erzeugen von Bediensignalen für die Kontrolleinheit eingesetzt werden. Beispielsweise kann ein vertikales Kippen zu einem Navigieren innerhalb einer Wiedergabeliste eingesetzt werden, während ein horizontales Kippen einen Wechsel zwischen Applikationen ermöglicht.

In einer bevorzugten Ausführungsform weist die erfindungsgemäße Vorrichtung einen Datenanschluss, beispielsweise einen USB-Anschluss auf. Über einen solchen Anschluss kann beispielsweise ein in einer bevorzugten Ausführungsform als Teil der Vorrichtung vorgesehener Speicher mit Audioinformationen enthaltenden Daten belegt werden. Ebenso ist es möglich, die erfindungsgemäße Vorrichtung über einen solchen Anschluss mit einem Computer zu verbinden, beispielsweise um die Software der Vorrichtung zu konfigurieren.

In einer bevorzugten Ausführungsform ist die Vorrichtung mit Schaumstoff oder einem anderen elastischen Material ummantelt. Insbesondere bevorzugt ist die erfindungsgemäße Vorrichtung vollständig mit Schaumstoff oder einem anderen elastischen Material ummantelt, bzw. bei einer Ausführungsform mit einem Display nur in dem Bereich des Displays nicht mit Schaumstoff oder einem elastischen Material ummantelt. Die Ummantelung schützt zum einen die weiteren Bauelemente der Vorrichtung. Zum anderen schützt die Ummantelung Kinder vor Verletzungen.

In einer bevorzugten Ausführungsform weist die erfindungsgemäße Vorrichtung einen Energiespeicher, insbesondere eine Batterie, insbesondere bevorzugt eine wiederaufladbare Batterie auf. In einer bevorzugten Ausführungsform ist die erfindungsgemäße Vorrichtung derart ausgebildet, dass die Batterie drahtlos aufgeladen werden kann, beispielsweise mittels induktiver Energieübertragung. Dies bietet den Vorteil, dass die Ladestation kindgerecht ausgebildet werden kann, beispielsweise in Form einer Ladeschale, in die die erfindungsgemäße Vorrichtung zum Aufladen allein gelegt werden muss. Dadurch wird vermieden, dass Kinder elektrische Kabel handhaben müssen, um die Batterie der erfindungsgemäßen Vorrichtung aufzuladen.

In einer bevorzugten Ausführungsform kann die erfindungsgemäße Vorrichtung Licht erzeugen, beispielsweise um als Nachtlicht zu funktionieren.

In einer bevorzugten Ausführungsform weist die erfindungsgemäße Vorrichtung ein Gehäuse auf, in dem der Sensor so angeordnet ist, wobei der Bereich der Umgebung des Sensors, in dem der Sensor eine Eigenschaft oder eine Änderung einer Eigenschaft dieser Umgebung feststellen kann, sich nicht weiter als 1m, insbesondere bevorzugt nicht weiter als 150mm, insbesondere bevorzugt nicht weiter als 100 mm, insbesondere bevorzugt nicht weiter als 50 mm, insbesondere bevorzugt nicht weiter als 10 mm, insbesondere bevorzugt nicht weiter als 5 mm über eine Oberfläche des Gehäuses hinaus erstreckt. Dies bietet den Vorteil, dass die Eigenschaft, bzw. die Änderung der Eigenschaft, die der Sensor feststellen soll, damit die Kontrolleinheit den Lautsprecher zur Wiedergabe der Audioinformation ansteuert, nur in einem engen Bereich um das Gehäuse der Vorrichtung erkannt wird. Dies vermeidet Fehlbedienungen.

In einer bevorzugten Ausführungsform ist die Vorrichtung aus nicht oder schwer brennbarem Material hergestellt.

In einer bevorzugten Ausführungsform weist die Vorrichtung ein Mikrofon oder eine Anschlussmöglichkeit für eingehende Audiosignale, beispielsweise von einem Mikrofon auf. Dies ermöglicht es, die Vorrichtung mit Sprache zu steuern oder Aufnahmen zu machen.

Insbesondere bevorzugt kann die Vorrichtung über eine WLAN-Antenne in ein Wireless Local Area Network eingebunden sein und über die WLAN-Antenne Steuerbefehle empfangen, beispielsweise über ein Smartphone oder einen PC gesteuert werden. Diese Steuerbefehle sind in einer bevorzugten Ausführungsform keine Steuerbefehle, mit der Benutzer den Beginn der Wiedergabe der Audioinformation beeinflussen kann. Ebenso kann die erfindungsgemäße Vorrichtung dazu ausgebildet sein, über eine Fernbedienung bedient zu werden.

In einer bevorzugten Ausführungsform weist die erfindungsgemäße Vorrichtung eine Kamera auf. Wird die erfindungsgemäße Vorrichtung beispielsweise als Nachtlicht ausgebildet, so kann die Kamera eine Überwachungsfunktion für das neben der Vorrichtung liegende Kind übernehmen, indem die Kamera beispielsweise von einem Smartphone aus angesteuert werden kann und das von der Kamera aufgenommene Bild auf einem Display wie einem Fernseher, einem Smartphone oder anderem mobilen Display wiedergegeben werden kann. Ergänzend oder alternativ kann die von einem Mikrofon aufgenommene bzw. die durch eine Anschlussmöglichkeit eingespeiste Audioinformation auf diesem Wege auf einen Lautsprecher oder Smartphone wiedergegeben werden.

Ebenso ist es möglich, dass eine über eine WLAN-Antenne in ein Wireless Local Area Network eingebundene Vorrichtung die wiederzugebende Audioinformation an andere Teilnehmer des Netzwerks übergibt, beispielsweise an einen Fernseher oder einen anderen Lautsprecher streamt.

In einer bevorzugten Ausführungsform ist das Betriebssystem der Kontrolleinheit Firefox OS. In einer bevorzugten Ausführungsform kann das Betriebssystem der Kontrolleinheit durch Updates aktualisiert werden.

In einer bevorzugten Ausführungsform ist die Kontrolleinheit dazu ausgebildet, Informationen über die Ansteuerung des Lautsprechers zu ermitteln und zu dokumentieren, beispielsweise die Häufigkeit, mit der bestimmte Audioinformationen abgespielt wurden oder die Reihenfolge, mit der bestimmte Audioinformationen abgespielt wurden. Insbesondere bevorzugt ist die Vorrichtung dazu ausgebildet, derartige Informationen an einen Server zu kommunizieren.

In einer bevorzugten Ausführungsform weist die Vorrichtung Mittel auf, um einen nachstehend beschriebenen Kennungsträger mit Strom zu versorgen, bevorzugt ohne elektrischen Kontakt, beispielsweise per Induktion.

Das erfindungsgemäße System weist eine erfindungsgemäße Vorrichtung (ein erfindungsgemäßes Spielzeug) und einen Kennungsträger auf, wobei der Kennungsträger eine Eigenschaft hat, die der Sensor feststellen kann, wenn sich der Kennungsträger innerhalb des Bereichs der Umgebung des Sensors befindet, oder der Kennungsträger eine Eigenschaft der Umgebung des Sensors ändert. Grundgedanke des erfindungsgemäßen Systems ist es, dass die Kontrolleinheit den Lautsprecher zur Wiedergabe einer Audioinformation dann ansteuert, wenn ein bestimmter Kennungsträger in den Bereich der Umgebung des Sensors gebracht wird, in dem der Sensor eine Eigenschaft, bzw. eine Änderung einer Eigenschaft feststellen kann. Dabei soll in einer besonders bevorzugten Ausführungsform aber bereits das Verbringen des Kennungsträgers in diesen Bereich das Ansteuern des Lautsprechers zur Wiedergabe der Audioinformation auslösen, ohne dass weitere Bedienbefehle erzeugt werden müssen.

Dieses Grundkonzept des erfindungsgemäßen Systems vereinfacht die Bedienung von Vorrichtungen zur Wiedergabe von Audioinformationen erheblich. Es ist nun nicht mehr notwendig, zerkratzbare CDs zu handhaben, wie das bei den aus der Praxis bekannten CD-Spielern notwendig ist, oder die bei den aus der Praxis bekannten MP3-Spielern zur Ansteuerung der Lautsprecher zur Wiedergabe einer Audioinformation notwendigen, komplexen Bediensequenzen von Bedienelementen zu erlernen. In der einfachsten Ausführungsform der Erfindung reicht es aus, den Kennungsträger in den Bereich der Umgebung des Sensors zu verbringen, in dem der die Eigenschaft oder eine Änderung der Eigenschaft feststellen kann, und damit automatisch die Ansteuerung des Lautsprechers zur Wiedergabe der Audioinformation durch die Kontrolleinheit auszulösen.

Der Kennungsträger weist einen RFID-Transponder auf Dadurch kann der erfindungsgemäße Kennungsträger beispielsweise derart ausgestaltet werden, dass er mit der erfindungsgemäßen Vorrichtung über den NFC-Standard kommunizieren kann. Besonders der Einsatz dieser Technologien erlaubt eine Vielfalt von Kommunikationsmöglichkeiten zwischen dem Kennungsträger und der Vorrichtung. Insbesondere erlaubt der Einsatz dieser Technologien das Erkennen einer Vielzahl von Kennungen. Dadurch wird es für die erfindungsgemäße Vorrichtung möglich, aus einer Vielzahl von Audioinformationen die Audioinformation auszuwählen, die wiedergegeben werden soll, beispielsweise wenn jede wiederzugebende Audioinformation ihre eigene Kennung zugeordnet bekommt, beispielsweise in einer in der erfindungsgemäßen Vorrichtung oder auf einem Server abgelegten Zuordnungstabelle.

In einer bevorzugten Ausführungsform weist der Kennungsträger einen Magneten auf und weist die Vorrichtung eine Fläche auf, an der der Magnet anhaften kann. Alternativ kann die Vorrichtung einen Magneten aufweisen und der Kennungsträger eine Fläche, mit der der Kennungsträger an dem Magneten anhaften kann. Dadurch können die Vorrichtung und der Kennungsträger lösbar miteinander verbunden werden. Dies erlaubt es, die Vorrichtung zu bewegen, ohne dass der Kennungsträger eine bestimmte Relativposition relativ zur Vorrichtung verliert.

In einer bevorzugten Ausführungsform hat der Kennungsträger die Form einer Figur, insbesondere die Form einer menschlichen Figur oder einer Tierfigur oder einer Phantasiefigur. Insbesondere bevorzugt weist der Kennungsträger die Form einer Figur mit Füßen auf. Insbesondere bevorzugt ist bei einem Kennungsträger mit der Form einer Figur mit Füßen der Magnet in den Füßen der Figur angeordnet, so dass die Figur auf der erfindungsgemäßen Vorrichtung stehen kann.

In einer bevorzugten Ausführungsform ist der Kennungsträger nach Art einer Figur ausgebildet, weist aber keinen Sockel auf, auf dem die Figur steht.

In einer bevorzugten Ausführungsform ist der Kennungsträger nicht mechanisch mit der Vorrichtung fixierbar. Insbesondere bevorzugt weisen die Vorrichtung und der Kennungsträger kein System aus Stecker und Buchse auf, mit der der Kennungsträger mit der Vorrichtung verbunden werden könnte.

In einer bevorzugten Ausführungsform ist der Kennungsträger so ausgestaltet, dass der Bediener ihn aufgrund seiner Form, Farbgebung, Oberflächenstruktur und/oder seinem Material mit einer bestimmten Audioinformation assoziieren kann, und dass beim Verbringen in den Bereich der Umgebung des Sensors, in dem dieser eine Eigenschaft oder eine Änderung einer Eigenschaft dieser Umgebung feststellen kann, das Ansteuern des Lautsprechers zur Wiedergabe einer Audioinformation ausgelöst wird, die inhaltlich im Zusammenhang mit der Assoziation des Benutzers steht. Er kann beispielsweise nach Art einer Figur ausgebildet sein und die Wiedergabe einer Audioinformation auslösen, die in Verbindung mit der Form der Figur steht. Beispielsweise kann die Figur die Form von Benjamin Blümchen^{®} haben und die wiedergegebene Audioinformation eine Hörgeschichte mit Benjamin Blümchen als Protagonisten sein. Ebenso ist es denkbar, dass der Kennungsträger individuell angepasst werden kann. Beispielsweise kann der Kennungsträger als Figur ausgebildet sein, die der Form einer Person des näheren Umfelds einer anderen Person ähnelt und die wiedergegebene Audioinformation eine von dieser Person vorher aufgenommene Audioinformation sein. Ebenso ist es denkbar, dass der Kennungsträger die Form einer Figur hat, die einem Wissenschaftler ähnelt, und die Audioinformation Inhalte des von dem Wissenschaftler Herausgefundenen haben. Weiter ist denkbar, dass die Figur einem Komponisten oder Interpreten ähnelt, und die Audioinformation Inhalte von diesem Komponisten oder Interpreten enthält. Es ist denkbar, dass ein Kennungsträger die Audioinformationen zu einem Musikstück, einer Sammlung von Musikstücken (Album) oder einer Playlist auslöst.

In einer ergänzenden oder alternativen Ausführungsform ist der Kennungsträger als Aufkleber oder Modul ausgestaltet, das an anderen Objekten befestigt werden kann.

In einer bevorzugten Ausführungsform ist der Kennungsträger so ausgebildet, dass die auf ihm gespeicherten Daten verändert werden können. In einer anderen bevorzugten Ausführungsform ist der Kennungsträger so ausgebildet, dass die auf ihm gespeicherten Daten nicht verändert werden können. In einer weiteren bevorzugten Ausführungsform ist der Kennungsträger so ausgebildet, dass die auf ihm gespeicherten Daten nur einmal verändert werden können, danach nicht mehr. In einer bevorzugten Ausführungsform ist ein zunächst veränderbarer Kennungsträger so ausgestaltet, dass er durch eine bestimmte Bearbeitung zu einem unveränderbaren Kennungsträger werden kann, bevorzugt so, dass er nicht wieder zu einem veränderbaren Kennungsträger zurückverwandelt werden kann. Die Bearbeitung kann bevorzugt mechanischer Art sein, etwa Durchtrennung oder Verbindung bestimmter elektrischer Leitungen. In ergänzenden oder alternativen Ausführungsformen kann die Bearbeitung durch sichtbares Licht, durch unsichtbare elektromagnetische Wellen (wie beispielsweise Funksignale, ultraviolettes Licht) durch einen magnetischen, elektrischen und/oder durch einen thermischen Impuls erfolgen. In einer bevorzugten Ausführungsform ist der Kennungsträger so ausgebildet, dass er sich mit einem Klick-Mechanismus in oder an anderen Gegenständen, wie beispielsweise einer Figur, befestigen lässt. Nach diesem Vorgang kann der Gegenstand insgesamt als Kennungsträger angesehen werden. In einer besonders bevorzugten Ausführungsform ist der Kennungsträger so ausgestaltet, dass er durch eine mechanische Bearbeitung unveränderbar gemacht werden kann, die mit der Bewegung zur Betätigung des Klick-Mechanismus' zur Verbindung des Kennungsträgers mit einem Gegenstand kombiniert werden kann, beispielsweise so, dass die Bearbeitung gleichzeitig mit dem Einklicken in den Gegenstand erfolgen kann.

In einer bevorzugten Ausführungsform ist der Kennungsträger so ausgebildet, dass er per Induktion mit Strom zum Betrieb von aktiven elektronischen Bauteilen versorgt werden kann. In einer bevorzugten Ausführungsform ist der Kennungsträger so ausgebildet, dass er aktive elektronische Bauteile enthält, die einen Datenspeicher zur Verfügung stellen. Dieser Datenspeicher ist bevorzugt nicht-flüchtig. In einer bevorzugten Ausführungsform ist der Datenspeicher so ausgebildet, dass er eine Kennung und/oder Audioinformationen zur Verfügung stellen kann, die Grundlage für die Veränderung von Eigenschaften der Umgebung sein können. Indem auf dem Kennungsträger gespeicherte Audioinformationen an die Vorrichtung übertragen werden, kann die Vorrichtung eine Audioinformation abspielen, die nicht in der Vorrichtung gespeichert war, bevor der Sensor innerhalb des Bereichs seiner Umgebung eine bestimmte Eigenschaft oder eine bestimmte Änderung einer Eigenschaft dieser Umgebung feststellt oder die Kontrolleinheit eine bestimmte Änderung der von dem Sensor festgestellten Eigenschaft feststellt. In einer bevorzugten Ausführungsform weist der Kennungsträger aktive elektronische Bauteile auf, die zur Veränderung von Eigenschaften der Umgebung geeignet sind, die von einem Sensor und einer Kontrolleinheit wieder in Daten umgesetzt werden können. In einer bevorzugten Ausführungsform weist der Kennungsträger einen Prozessor auf. In einer bevorzugten Ausführungsform weist der Kennungsträger auch eine Datenempfangseinheit auf.

Ein Kennungsträger kann auch unabhängig von dem Zweck, Audioinformationen wiederzugeben, von Vorteil sein. Für Speicherung und Übertragung von Daten allgemein kann eine Ausführungsform so ausgestaltet sein, dass sie
- eine Antenne für elektromagnetische Wellen,
- ein aktives elektrisches Bauteil, das einen nicht-flüchtigen Datenspeicher mit Speicherplatz von mindestens 1 Megabyte enthält,
- eine Sendeeinheit, die so ausgebildet ist, dass sie Daten aus dem nicht-flüchtigen Datenspeicher über die Antenne aussenden kann,
- eine Energieempfangseinheit, die Energie empfangen und in ausreichend Strom umwandeln kann, um den Datenspeicher und die Sendeeinheit mit Strom zu versorgen, so dass für den Datensendevorgang kein dauerhafter Energiespeicher benötigt wird, wobei die Energieempfangseinheit von der Antenne verschieden ist,
- eine Steuerungseinheit, die zum Auslesen von Daten aus dem Datenspeicher und zum Aussenden der Daten über die Sendeeinheit bereit ist
aufweist. Insbesondere bevorzugt zeigt die Steuerungseinheit die Bereitschaft zum Auslesen von Daten kontaktlos an, sobald die Energieempfangseinheit dafür ausreichend Energie zur Verfügung stellt, und überträgt auf kontaktlose Anforderung hin Daten aus dem Datenspeicher ganz oder teilweise über die Sendeeinheit. Die vorstehend und nachstehend beschriebenen Aspekte einzelner Ausführungsformen eines Kennungsträgers lassen sich auch auf einen solchen allgemeinverwendbaren Kennungsträger anwenden, wobei an die Ansteuerung eines Lautsprechers jeweils die Verarbeitung oder Anzeige der auf dem Kennungsträger gespeicherten Daten tritt. In einer bevorzugten Ausführungsform hat der Datenspeicher einen Speicherplatz von mindestens 500 Megabyte, 1 Gigabyte oder 4 Gigabyte.

In einer bevorzugten Ausführungsform ist der Kennungsträger derart ausgebildet, dass er innerhalb eines Bereichs der Umgebung des Sensors nur eine bestimmte Eigenschaft oder nur eine bestimmte Änderung einer Eigenschaft dieser Umgebung erzeugen kann und somit nur bewirken kann, dass die Kontrolleinheit den Lautsprecher zur Wiedergabe einer bestimmten Audioinformation ansteuert. In einer derartigen Ausführungsform des Systems ist es vorgesehen, dass zusätzliche Kennungsträger beschafft bzw. vorgehalten werden müssen, um zusätzliche Audioinformationen abzuspielen. Damit löst sich die Erfindung in dieser Ausführungsform von dem bei MP3-Spielern des Standes der Technik häufig wiederzufindenden Prinzip, möglichst viele Funktionen, bzw. möglichst viele Audioinformationen derart in einem Gerät zu vereinen, dass sie jeweils über bestimmte Bedienfolgen aber ohne Hinzunahme weiterer Vorrichtungen abrufbar sind. Im Verhältnis zu derartigen MP3-Spielern ist das erfindungsgemäße System in der hier beschriebenen Ausführungsform aufwendiger ausgestaltet, da eine Vielzahl von Kennungsträgern vorgehalten werden muss, um unterschiedliche Audioinformationen abzuspielen. Es hat sich jedoch gezeigt, dass ein Bedarf für ein einfaches Bedienkonzept besteht, bei dem die Zahl der vorzuhaltenden Kennungsträger zu Gunsten des einfachen Abspielens der einen dem Kennungsträger zugeordneten Audioinformation erhöht wird. Beispielsweise erlaubt es diese Ausführungsform ein Spielzeug-System aufzubauen, bei der figurenartig ausgebildete Kennungsträger zwar jeweils nur dazu geeignet sind, ein bestimmtes, ihnen zugeordnetes Musikstück oder eine bestimmte, ihnen zugeordnete gesprochene Geschichte zu identifizieren, die durch Ansteuerung des Lautsprechers des Spielzeugs abgespielt wird, die Kinder aber durch Wahl der Figur und aufgrund des vereinfachten Bedienkonzepts, das in bevorzugter Ausführungsform das sofortige Abspielen des Musikstücks, bzw. der gesprochenen Geschichte erlaubt, sobald der Kennungsträger innerhalb eines Bereichs der Umgebung des Sensors die entsprechende eine Eigenschaft oder die entsprechende eine Änderung einer Eigenschaft dieser Umgebung erzeugt hat, selbst wählen können, welches Musikstück, bzw. welche gesprochene Geschichte wiedergegeben werden soll. Die durch die Erzeugung der einen entsprechenden Eigenschaft oder der einen entsprechenden Änderung einer Eigenschaft dieser Umgebung kann zur Wiedergabe der Audioinformation einen Datensatz mit getrennt auslesbaren Datenfolgen identifizieren, um beispielsweise durch den einen Kennungsträger ein Hörbuch in Form von einzelnen Kapiteln zu identifizieren und die einzelnen Kapitel eines Hörbuchs ansteuerbar zu machen, bzw. die einzelnen Folgen einer Fortsetzungsgeschichte oder einer Serie zu identifizieren.

Insbesondere bevorzugt hat der Kennungsträger kein Bedienelement, mit dem die Art beeinflusst werden kann, mit der der Kennungsträger innerhalb eines Bereichs der Umgebung des Sensors eine Eigenschaft oder nur eine Änderung einer Eigenschaft dieser Umgebung erzeugen kann. Diese Ausführungsform eignet sich besonders gut für Anwendungsfälle, in denen der Kennungsträger derart ausgebildet ist, dass er innerhalb eines Bereichs der Umgebung des Sensors nur eine bestimmte Eigenschaft oder nur eine bestimmte Änderung einer Eigenschaft dieser Umgebung erzeugen kann und somit nur bewirken kann, dass die Kontrolleinheit den Lautsprecher zur Wiedergabe einer bestimmten Audioinformation ansteuert. Ergänzend oder alternativ kann der Kennungsträger ein Bedienelement aufweisen, mit der innerhalb des Bereichs der Umgebung des Sensors nicht nur eine, sondern mehrere bestimmte Eigenschaften oder eine bestimmte Änderungen einer Eigenschaft dieser Umgebung erzeugen kann, die vom Sensor festgestellt werden und mit der die Kontrolleinheit die Art der Wiedergabe der Audioinformation ändern kann, beispielsweise die Lautstärke der Wiedergabe oder Steuerungsbefehle zur Auswahl des nächsten oder vorigen Kapitels oder Musikstücks. So kann durch Betätigen des Bedienelements des Kennungsträgers, beispielsweise durch das Drehen eines Arms oder eines Kopfs eines als Figur ausgebildeten Kennungsträgers, die Art der Wiedergabe der Audioinformation geändert werden, beispielsweise die Lautstärke der Wiedergabe.

In einer bevorzugten Ausführungsform weist der Kennungsträger keine Energiespeicher, insbesondere bevorzugt keine dauerhaften Energiespeicher wie beispielsweise eine Batterie auf, insbesondere bevorzugt keine Energiespeicher mit Ausnahme eines Kondensators.

Ein Verfahren zur Wiedergabe einer Audioinformation wird mit einer Vorrichtung mit
- einem Lautsprecher oder einem Lautsprecheranschluss,
- einem Sensor, der innerhalb eines Bereichs seiner Umgebung eine Eigenschaft oder eine Änderung einer Eigenschaft dieser Umgebung feststellen kann,
- einer Auflage, auf der ein Gegenstand dauerhaft platziert werden kann, wobei der Sensor zumindest in einem Bereich oberhalb der Auflage eine Eigenschaft oder eine Änderung einer Eigenschaft dieses Bereichs feststellen kann, und/oder einer Befestigung, an der ein Gegenstand dauerhaft befestigt werden kann, wobei der Sensor zumindest in einem Bereich benachbart der Befestigung eine Eigenschaft oder eine Änderung einer Eigenschaft dieses Bereichs feststellen kann,
- einer Kontrolleinheit durchgeführt, wobei
bei dem die Kontrolleinheit den Lautsprecher oder den Lautsprecheranschluss zur Wiedergabe einer Audioinformation, deren Wiedergabe insbesondere bevorzugt mindestens 10s dauert, ansteuert, wenn der Sensor innerhalb des Bereichs seiner Umgebung eine bestimmte Eigenschaft oder eine bestimmte Änderung einer Eigenschaft dieser Umgebung feststellt oder wenn die Kontrolleinheit eine bestimmte Änderung der von dem Sensor festgestellten Eigenschaft feststellt.

Der Kennungsträger ist dazu geeignet, mit einer erfindungsgemäßen Vorrichtung in einem erfindungsgemäßen System oder in einem erfindungsgemäßen Verfahren eingesetzt zu werden.

Nachfolgend wird die Erfindung anhand einer lediglich Ausführungsformen der Erfindung darstellenden Zeichnung näher erläutert.

Darin zeigen:
- Fig. 1: eine perspektivische Ansicht der erfindungsgemäßen Vorrichtung zur Wiedergabe einer Audioinformation und
- Fig. 2: eine Frontalansicht auf ein aus einer erfindungsgemäßen Vorrichtung gemäß Fig. 1 und einem Kennungsträger bestehenden erfindungsgemäßen System.

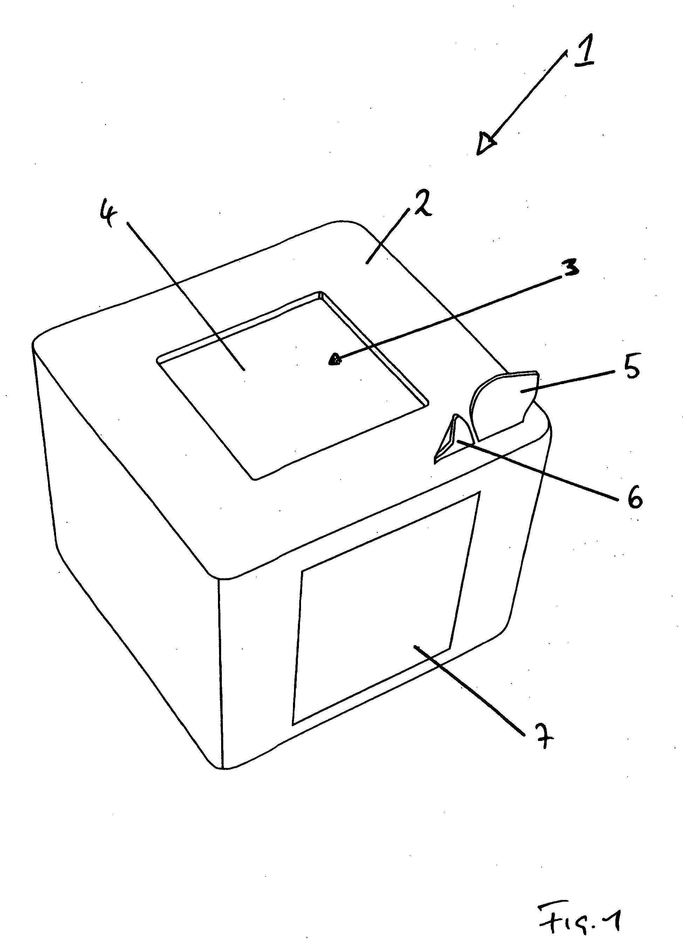

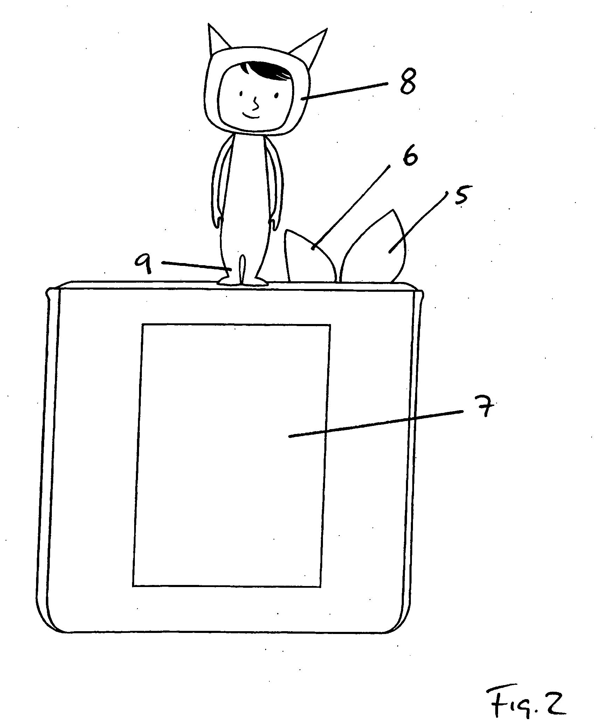

Die Fig. 1 zeigt die erfindungsgemäße Vorrichtung zur Wiedergabe einer Audioinformation. Die Vorrichtung 1 weist einen in der perspektivischen Ansicht der Fig. 1 nicht näher dargestellten Lautsprecher auf. Ferner weist die Vorrichtung 1 an ihrer Oberseite 2 eine Mulde 3 auf. Im Inneren der Vorrichtung 1, unterhalb der Mulde 3 ist ein (nicht näher dargestellter) Sensor angeordnet, der innerhalb des Bereichs der Mulde 3 eine Eigenschaft oder eine Änderung einer Eigenschaft dieser Umgebung feststellen kann, nämlich einen passiven RFID-Transponder (vgl. Fig. 2) auslesen kann. Ferner weist die Vorrichtung eine (nicht näher dargestellte) Kontrolleinheit auf, die den Lautsprecher zur Wiedergabe einer Audioinformation ansteuern kann, wenn der Sensor innerhalb des Bereichs seiner Umgebung eine bestimmte Eigenschaft oder eine bestimmte Änderung einer Eigenschaft dieser Umgebung feststellt oder die Kontrolleinheit eine bestimmte Änderung der von dem Sensor festgestellten Eigenschaft feststellt.

Der Sensor ist derart innerhalb des Gehäuses der Vorrichtung 1 angeordnet, dass der Bereich der Umgebung des Sensors, in dem der Sensor eine Eigenschaft oder eine Änderung einer Eigenschaft dieser Umgebung feststellen kann, sich nicht weiter als 100 mm über die Grundfläche 4 der Mulde 3 nach oben hinaus erstreckt.

Die erfindungsgemäße Vorrichtung weist ein erstes, ohrenförmig ausgebildetes Bedienelement 5 und ein zweites, ebenfalls ohrenförmig ausgebildetes Bedienelement 6 auf. Das Bedienelement 5 ist größer ausgestaltet als das Bedienelement 6. Sowohl das Bedienelement 5 als auch das Bedienelement 6 können relativ zu dem übrigen Gehäuse der Vorrichtung 1 eine Kippbewegung vollziehen und in die in Fig. 1 dargestellte Grundstellung zurückschwenken.

Ferner weist die Vorrichtung 1 ein Display 7 auf.

Das in Fig. 2 dargestellte System weist neben der in Fig. 1 dargestellten Vorrichtung einen in Form einer Figur ausgebildeten Kennungsträger 8 auf. Der als Figur ausgebildete Kennungsträger 8 weist Beine 9 und Füße und keinen Sockel auf, mit dem die Füße 9 fest verbunden wären. In den Füßen des als Figur ausgebildeten Kennungsträgers 8 sind (nicht näher dargestellte) Magnete vorgesehen. Diese können mit unmittelbar unter der Bodenfläche 4 der Mulde 3 angeordneten Magneten oder Metallobjekten zusammenwirken, so dass der Kennungsträger 8 auf der Bodenplatte 4 der Mulde 3 lösbar festgehalten werden kann.

Die Bedienung des erfindungsgemäßen Systems erfolgt wie folgt:
Die Fig. 1 zeigt die erfindungsgemäße Vorrichtung in einem Grundzustand, in der sie in der hier dargestellten Ausführungsform keine Audioinformation wiedergibt. Der Sensor überwacht dauerhaft oder periodisch den Bereich der Mulde 3 daraufhin, ob dieser Bereich eine bestimmte Eigenschaft oder eine bestimmte Änderung einer Eigenschaft aufweist. In der hier dargestellten Ausführungsform bewacht der Sensor den Bereich der Mulde 3 daraufhin, ob ein bestimmter RFID-Transponder in den Bereich der Mulde verbracht wird. In der in die Fig. 1 dargestellten Betriebssituation ist dies nicht der Fall, so dass die Vorrichtung 1 keine Audioinformation wiedergibt.

Die Fig. 2 zeigt die Betriebssituation, in der das erfindungsgemäße System durch Hinzufügen des Kennungsträgers 8 vervollständigt worden ist. Der Kennungsträger 8 wird auf die Bodenplatte 4 der Mulde 3 gestellt und haftet dort mittels der in den Füßen des Kennungsträgers 8 vorgesehenen Magneten an. Der Kennungsträger 8 weist einen (nicht näher dargestellten) RFID-Transponder auf. Dadurch dass der Kennungsträger 8 nunmehr in den von dem Sensor überwachten Bereich der Umgebung des Sensors verbracht worden ist, weist dieser nunmehr eine bestimmte, von dem Sensor feststellbare Eigenschaft auf. Der Sensor erkennt das Vorhandensein des RFID-Transponders in dem Kennungsträger 8 und teilt dies der (nicht näher dargestellten) Kontrolleinheit mittels eines Signals mit. Daraufhin steuert die Kontrolleinheit den Lautsprecher zur Wiedergabe einer Audioinformation an, ohne dass es der Betätigung eines weiteren Bedienelements bedürfte.

Der Sensor liest aus dem RFID-Transponder des Kennungsträgers 8 eine Kennung aus und teilt der Kontrolleinheit diese Kennung mit. Aufgrund einer in der Kontrolleinheit abgelegten Zuordnungstabelle ordnet die Kontrolleinheit die von dem Sensor ausgelesene Kennung einem bestimmten, eine bestimmte Audioinformation enthaltenden Datensatz in einem (nicht näher dargestellten) Speicher der Vorrichtung 1 zu. Daraufhin steuert die Kontrolleinheit den Lautsprecher an, um die in den bestimmten, von der Kontrolleinheit aus dem Speicher ausgelesenen Daten wiedergelegte Audioinformation wiederzugeben. Bei dieser Audioinformation handelt es sich um ein Musikstück, dessen Wiedergabe mindestens 10s dauert.

Stellt die Kontrolleinheit fest, dass der zu der Kennung zugehörige Datensatz noch nicht in dem Speicher der Vorrichtung abgespeichert ist, so stellt die Kontrolleinheit über eine nicht näher dargestellte Einrichtung eine Verbindung zu einem Server her. Die Kontaktdaten des Servers sind in der Kontrolleinheit der Vorrichtung abgelegt. An diesem Server identifiziert sich die Kontrolleinheit, in dem sie dem Server eine Gerätekennung der Vorrichtung, nämlich in diesem Ausführungsbeispiel die Prozessorkennung des Prozessors der Kontrolleinheit mitteilt. Ferner teilt die Kontrolleinheit dem Server mit, welches Datenpaket von einem externen Speicher auf den Speicher der Vorrichtung geladen werden muss. Stellt der Server nach Prüfen der Gerätekennung fest, dass die Vorrichtung berechtigt ist, das Datenpaket von dem externen Speicher auf einen Speicher der Vorrichtung zu laden, so gibt der Server dieses Datenpaket zum Übertragen frei und überträgt das Datenpaket von dem externen Speicher auf einen Speicher der Vorrichtung.

## Patentansprüche

1. Spielzeug zur Wiedergabe von Musik oder einer gesprochenen Geschichte mit
- einem Lautsprecher,
- einem Sensor, der innerhalb eines Bereichs seiner Umgebung eine Eigenschaft oder eine Änderung einer Eigenschaft dieser Umgebung feststellen kann,
- einer Kontrolleinheit, die den Lautsprecher zur Wiedergabe von Musik oder einer gesprochenen Geschichte ansteuern kann, wenn der Sensor innerhalb des Bereichs seiner Umgebung eine bestimmte Eigenschaft oder eine bestimmte Änderung einer Eigenschaft dieser Umgebung feststellt oder wenn die Kontrolleinheit eine bestimmte Änderung der von dem Sensor festgestellten Eigenschaft feststellt,
wobei der Sensor ein Lesegerät zum Kommunizieren mit einem passiven RFID-Transponders und/oder zum Kommunizieren mit einem aktiven RFID-Transponder ist.
**dadurch gekennzeichnet, dass** das Spielzeug einen Prozessor mit einer Kennung oder einem Speicherchip mit einer Kennung aufweist, wobei die Kennung des Prozessors oder des Speicherchips eine Gerätekennung ist und das Spielzeug eine Einrichtung zum Aussenden eines von der Gerätekennung abhängigen Signals aufweist.

2. Spielzeug nach Anspruch 1, **dadurch gekennzeichnet, dass** die Einrichtung zum Aussenden eines von der Gerätekennung abhängigen Signals ein kabelgebundenes Signal aussenden kann oder ein Funksignal aussenden kann.

3. System mit einem Spielzeug nach einem der Ansprüche 1 oder 2 und einem Kennungsträger (8), wobei der Kennungsträger (8) eine Eigenschaft hat, die der Sensor feststellen kann, wenn sich der Kennungsträger (8) innerhalb des Bereichs der Umgebung des Sensors befindet, oder der Kennungsträger (8) eine Eigenschaft der Umgebung des Sensors ändert, die der Sensor im Bereich seiner Umgebung feststellen kann, nämlich der Kennungsträger (8) einen passiven RFID-Transponder aufweist.

4. System nach Anspruch 3, **gekennzeichnet durch** einen externen Speicher, von dem ein Datenpaket auf einen Speicher des Spielzeugs übertragen werden kann und/oder auf den ein Datenpaket von dem Spielzeug übertragen werden kann, wenn der Sensor innerhalb des Bereichs seiner Umgebung eine bestimmte Eigenschaft oder eine bestimmte Änderung einer Eigenschaft dieser Umgebung feststellt oder wenn die Kontrolleinheit eine bestimmte Änderung der von dem Sensor festgestellten Eigenschaft feststellt.

5. System nach einem der Ansprüche 3 oder 4, **gekennzeichnet durch** eine externe Kontrolleinheit, an die ein Datenpaket von dem Spielzeug übertragen werden kann, oder von der ein Datenpaket an das Spielzeug übertragen werden kann, wenn der Sensor innerhalb des Bereichs seiner Umgebung eine bestimmte Eigenschaft oder eine bestimmte Änderung einer Eigenschaft dieser Umgebung feststellt oder wenn die Kontrolleinheit eine bestimmte Änderung der von dem Sensor festgestellten Eigenschaft feststellt.

6. Verfahren zur Wiedergabe einer Audioinformation mit einem Spielzeug nach einem der Ansprüche 1 bis 2 oder einem System nach einem der Ansprüche 3 bis 5 **dadurch gekennzeichnet, dass**
ein Datenpaket von einem externen Speicher und/oder von einer externen Kontrolleinheit auf einen Speicher des Spielzeugs und/oder ein Datenpaket von dem Spielzeug an einen externen Speicher und/oder an eine externe Kontrolleinheit übertragen wird, wenn der Sensor innerhalb des Bereichs seiner Umgebung eine bestimmte Eigenschaft oder eine bestimmte Änderung einer Eigenschaft dieser Umgebung feststellt oder wenn die Kontrolleinheit eine bestimmte Änderung der von dem Sensor festgestellten Eigenschaft feststellt.

## Claims

1. A toy for reproducing music or a narrated story including
- a loudspeaker,
- a sensor which can detect a property or a change in a property of its surroundings within an area of its surroundings,
- a control unit, which can control the loudspeaker for reproducing music or a narrated story if the sensor detects a certain property or a certain change in a property of its surroundings within the area of its surroundings, or if the control unit detects a certain change in the property detected by the sensor,
wherein the sensor is thus a reading device for communicating with a passive RFID transponder and/or for communicating with an active RFID transponder,
**characterised in that** the toy has a processor with an identifier or a memory chip with an identifier, wherein the identifier of the processor or the memory chip is a device identifier, and the toy has a device for emitting a signal dependent upon the device identifier.

2. The toy in accordance with Claim 1, **characterised in that** the device for emitting a signal that is dependent upon the device identifier can emit a cable-bound signal or a radio signal.

3. A system with a toy in accordance with one of Claims 1 or 2 and an identification carrier (8), wherein the identification carrier (8) has a property which the sensor can detect if the identification carrier (8) is located within the area of the surroundings of the sensor or the identification carrier (8) changes a property of the surroundings of the sensor which the sensor can detect in the area of its surroundings, namely the identification carrier (8) has a passive RFID transponder.

4. The system in accordance with Claim 3, **characterised by** an external memory, from which a data packet can be transmitted to a memory of the toy and/or to which a data packet can be transmitted from the toy if the sensor detects within the area of its surroundings a certain property or a certain change in a property of said surroundings, or if the control unit detects a certain change in the property detected by the sensor.

5. The system in accordance with one of Claims 3 or 4, **characterised by** an external control unit, to which a data packet can be transmitted from the toy, or from which a data packet can be transmitted to the toy, if the sensor detects within the area of its surroundings a certain property or a certain change in a property of said surroundings, or if the control unit detects a certain change in the property detected by the sensor.

6. A method of playing back audio information with a toy in accordance with one of Claims 1 to 2 or a system in accordance with one of Claims 3 to 5 **characterised in that** a data packet is transmitted from an external memory and/or an external control unit to a memory of the toy and/or a data packet is transmitted from the toy to an external memory and/or to an external control unit if the sensor detects a certain property or a certain change in a property of said surroundings within the area of its surroundings, or if the control unit detects a certain change in the property detected by the sensor.

## Revendications

1. Jouet pour lire de la musique ou une histoire racontée comportant
- un haut-parleur,
- un capteur, qui peut détecter à l'intérieur d'une zone de son environnement une propriété ou une modification d'une propriété de cet environnement,
- une unité de contrôle, qui peut commander le haut-parleur pour lire de la musique ou une histoire racontée, si le capteur détecte une certaine propriété ou une certaine modification d'une propriété à l'intérieur d'une zone de son environnement ou si l'unité de contrôle détermine une certaine modification de la propriété détectée par le capteur,
dans lequel le capteur est un lecteur pour communiquer avec un transpondeur RFID passif et/ou pour communiquer avec un transpondeur RFID actif,
**caractérisé en ce que** le jouet comporte un processeur avec un identifiant ou une puce mémoire avec un identifiant, dans lequel l'identifiant du processeur ou de la puce mémoire est un identifiant de dispositif et le jouet présente un dispositif pour émettre un signal fonction de l'identifiant de dispositif.

2. Jouet selon la revendication 1, **caractérisé en ce que** le dispositif d'émission d'un signal fonction de l'identifiant de l'appareil peut émettre un signal filaire ou peut émettre un signal radio.

3. Système comportant un jouet selon une des revendications 1 ou 2 et un support d'identifiant (8), dans lequel le support d'identifiant (8) a une propriété que le capteur peut déterminer lorsque le support d'identifiant (8) est situé dans la zone de l'environnement du capteur, ou le support d'identifiant (8) modifie une propriété de l'environnement du capteur que le capteur peut déterminer dans la zone de son environnement, à savoir le support d'identifiant (8) possède un transpondeur RFID passif.

4. Système selon la revendication 3, **caractérisé par** une mémoire externe, à partir de laquelle un paquet de données peut être transmis vers une mémoire du jouet et/ou vers laquelle un paquet de données peut être transmis depuis le jouet, si le capteur détermine une certaine propriété ou une certaine modification d'une certaine propriété de son environnement à l'intérieur d'une zone de son environnement ou si l'unité de contrôle détermine une certaine modification de la propriété déterminée par le capteur.

5. Système selon une des revendications 3 ou 4, **caractérisé par** une unité de contrôle externe, vers laquelle un paquet de données peut être transmis du jouet, ou à partir de laquelle un paquet de données peut être transmis au jouet si le capteur détermine une certaine propriété ou une certaine modification d'une certaine propriété de son environnement à l'intérieur d'une zone de son environnement ou si l'unité de contrôle détermine une certaine modification de la propriété déterminée par le capteur.

6. Procédé de lecture d'informations audio comportant un jouet selon une des revendications 1 à 2 ou un système selon une des revendications 3 à 5, **caractérisé en ce qu'**un paquet de données provenant d'une mémoire externe et/ou d'une unité de contrôle externe est transmis à une mémoire du jouet et/ou un paquet de données est transmis du jouet à une mémoire externe et/ou à une unité de commande externe, si le capteur détecte une certaine propriété ou une certaine modification d'une propriété de cet environnement à l'intérieur de la zone de son environnement ou si l'unité de contrôle détecte une certaine modification de la propriété déterminée par le capteur.
